# EUROPEAN PATENT SPECIFICATION

(11) **EP 4 282 192 B1**
(45) Date of publication and mention of the grant of the patent: **04.03.2026**
(21) Application number: 22720826.1
(22) Date of filing: 04.04.2022
(51) Int. Cl.: H04W 48/16, H04W 74/0833, H04W 74/0808, H04W 48/12, H04W 16/14, H04L 5/00, H04L 27/00, H04W 74/00

(54) **INITIAL CHANNEL ACCESS IN UNLICENSED SPECTRUM WITH DIRECTIONAL SENSING AND COMMUNICATION**
ANFANGSKANALZUGRIFF IN EINEM UNLIZENZIERTEN SPEKTRUM MIT DIREKTIONALER ERFASSUNG UND KOMMUNIKATION
ACCÈS À UN CANAL INITIAL DANS UN SPECTRE SANS LICENCE AVEC DÉTECTION ET COMMUNICATION DIRECTIONNELLES

(30) Priority: 05.04.2021 US 202163170974 P
(43) Date of publication of application: 29.11.2023
(73) Proprietor: Huawei Technologies Co., Ltd., Shenzhen, Guangdong 518129 (CN)
(72) Inventor: CALCEV, George, Hoffman Estates, Illinois 60192 (US)
(74) Representative: Epping - Hermann - Fischer
(86) International application number: PCT/US2022/023342
(87) International publication number: WO 2022/115883

(56) References cited:
- EP-A1- 4 007 409
- WO-A1-2021/020551
- WO-A1-2021/020590
- "3rd Generation Partnership Project; Technical Specification Group Radio Access Network; NR; Physical layer procedures for control (Release 16)", vol. RAN WG1, no. V16.5.0, 30 March 2021 (2021-03-30), pages 1 - 183, XP052000308, Retrieved from the Internet <URL:https://ftp.3gpp.org/Specs/archive/38_series/38.213/38213-g50.zip 38213-g50.docx> [retrieved on 20210330]
- SPREADTRUM COMMUNICATIONS: "Discussion on initial access aspects for NR from 52.6GHz to 71GHz", vol. RAN WG1, no. e-Meeting; 20200125 - 20200205, 18 January 2021 (2021-01-18), XP051970562, Retrieved from the Internet <URL:https://ftp.3gpp.org/tsg_ran/WG1_RL1/TSGR1_104-e/Docs/R1-2100825.zip R1-2100825 Discussion on initial access aspects for NR from 52.6GHz to 71GHz.docx> [retrieved on 20210118]
- "3rd Generation Partnership Project; Technical Specification Group Radio Access Network; NR; NR and NG-RAN Overall Description; Stage 2 (Release 16)", vol. RAN WG2, no. V16.5.0, 29 March 2021 (2021-03-29), pages 1 - 151, XP052000116, Retrieved from the Internet <URL:https://ftp.3gpp.org/Specs/archive/38_series/38.300/38300-g50.zip 38300-g50.docx> [retrieved on 20210329]
- "3rd Generation Partnership Project; Technical Specification Group Radio Access Network; Physical layer procedures for shared spectrum channel access (Release 16)", vol. RAN WG1, no. V16.5.0, 30 March 2021 (2021-03-30), pages 1 - 27, XP052000304, Retrieved from the Internet <URL:https://ftp.3gpp.org/Specs/archive/37_series/37.213/37213-g50.zip 37213-g50.doc> [retrieved on 20210330]

## Description

### TECHNICAL FIELD

The present invention relates generally to a system and method for digital communications, and, in particular embodiments, to techniques and mechanisms for initial channel access with directional sensing and communication.

### BACKGROUND

The channel access in shared spectrum (unlicensed bands) for 57 GHz to 71 GHz in the European Union (EU) is specified in the European Telecommunications Standards Institute (ETSI) standards. The standard restricts power spectrum density transmissions (EIRP) to 23 dBm/MHz and the total maximum power (EIRP) to 40dBm. To facilitate co-existence in this spectrum band, the specification mandates the listen before talk (LBT) procedure.

Licensed exempt spectrum, also known as unlicensed spectrum or shared spectrum, has attracted a lot of interest from cellular operators. Long Term Evolution licensed assisted access (LTE-LAA) is specified in 3GPP LTE releases 13 and 14. More recently, in New Radio Unlicensed (NR-U), the operation in unlicensed spectrum (shared spectrum) is specified in release 16 (3GPP TS 38.213, which is hereby incorporated herein by reference in its entirety) for 3GPP New Radio (NR).

3GPP and IEEE technologies operating in unlicensed spectrum use Listen Before Talk (LBT) channel access. In certain regions, such European Union (EU) and Japan, the LBT rule is enforced by spectrum regulators to reduce the interference risk and to offer a fairer coexistence mechanism. The LBT mechanism requires the transmitter to check before a transmission if there are other occupants of the channel and postpone the transmission if the channel is occupied.

This disclosure defines an initial access procedure for directional beam sensing and communication that allows a UE to perform initial channel access to communicate in the unlicensed band in multiple spatial directions necessary for reasons such as robustness, spatial diversity, multi-TRP and multi-link connectivity, use of directional sensing and directional communication.

3GPP TS 38.213 V16.5.0, 3rd Generation Partnership Project; Technical Specification Group Radio Access Network; NR; Physical layer procedures for control (Release 16), specifies and establishes the characteristics of the physical layer procedures for control operations in 5G-NR.

WO2021020590A1 discloses a terminal device comprising detection circuitry configured to detect a SS/PBCH block with time index Y, the time index Y being ascending order in time domain for SS/PBCH block candidates in a half radio frame, beam index Z being determined by remainder of the time index Y divided by a Q, or given by remainder of a DMRS index for a PBCH in the SS/PBCH block divided by the Q, the Q being indicated by a MIB, reception circuitry configured to monitor at least the type-o PDCCH common search space set which corresponds to SS/PBCH block index Z+j*Q, the j is any non-negative integer to satisfy Z+j*Q is smaller than a number of usable SS/PBCH block candidates in a half radio frame indicated by system information.

WO2021020551A1 discloses a terminal device which receives DCI formats for use in PDSCH scheduling; transmits HARQ-ACK information in a slot n; when a higher-layer parameter is given, includes, with respect to a PDSCH group g, a monitoring opportunity for a PDCCH corresponding to a DCI format satisfying conditions in a set of PDCCH monitoring opportunities for the slot n; and, on the basis of at least the set of PDCCH monitoring opportunities for the slot n, generates the HARQ-ACK information. The conditions include condition 1 that the HARQ-ACK information corresponding to the PDSCH scheduled by the DCI format is triggered when transmitted in the lot n, and condition 2 that the PDSCH group g is indicated by a PGI field included in the DCI format.

### SUMMARY OF THE INVENTION

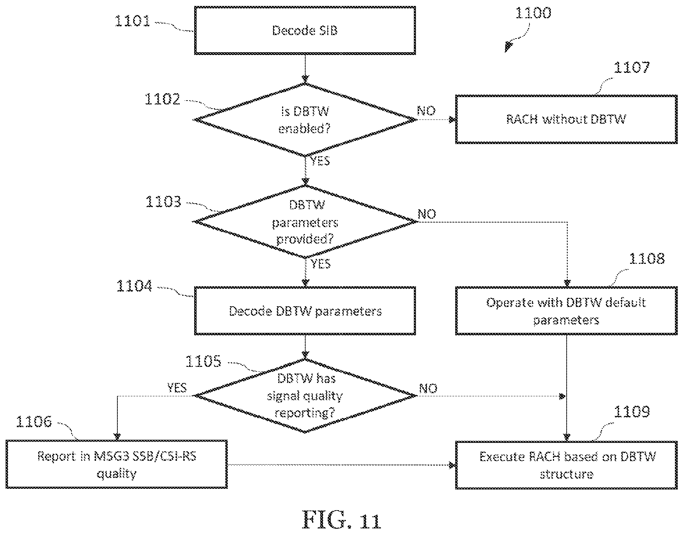

The invention is defined in the claims. In the following, the invention is best understood in view of embodiments disclosed with relation to Figure 11. The remaining embodiments, examples and/or aspects of the disclosure are provided for illustrative purposes and for facilitating a better understanding of the invention.

In accordance with an embodiment, a method for operating a user equipment (UE) is provided. The method comprises the UE decoding a master information block (MIB) or a system information block (SIB) or both a MIB and a SIB received from a base station, determining that discovery burst transmission window (DBTW) is enabled in accordance with at least the decoded MIB or SIB, decoding DBTW parameters, and executing a random access channel (RACH) procedure in accordance with the decoded DBTW parameters.

Optionally, in any of the preceding aspects, the method for operating a UE further comprises determining, in response to the DBTW being enabled, that no DBTW parameters are provided, and executing a RACH procedure in accordance with default DBTW parameters in response to determining that no DBTW parameters are provided.

Optionally, in any of the preceding aspects, the method for operating a UE further comprises receiving a message from the base station, determining that a message LBT is a short signal, and transmitting a third message without any LBT in response to determining that a timer for short signal has not expired.

In accordance with yet another embodiment, a method for operating a user equipment (UE) is provided. The method comprises identifying multiple synchronization signal/physical broadcast channel (SS/PBCH) and channel state information reference signal (CSI-RS) directions in accordance with multi-direction initial access being enabled, executing a listen before talk (LBT) procedure in multiple directions, and transmitting, by the UE, a first message in the multiple directions, wherein each preamble in the first message corresponds at least to a SS/PBCH block (SSB) or CSI-RS.

Optionally, in any of the preceding aspects, the method for operating a UE further comprises receiving a plurality of second messages from a base station in response to the transmission of the first message, executing a directional LBT procedure in response to receiving the plurality of second messages, and transmitting one or more third messages wherein the UE identifies itself as the unique transmitter of the first message.

Optionally, in any of the preceding aspects, the method for operating a UE further comprises receiving one or more fourth messages from the base station in response to the transmission of the one or more third messages and transmitting, to the base station, a hybrid automatic repeat request/acknowledgement (HARQ/ACK), the HARQ/ACK indicating a map of fourth messages that were successfully received by the UE.

In accordance with yet another embodiment, a user equipment (UE) is provided. The UE comprises a non-transitory memory storage comprising instructions and one or more processors in communication with the memory storage, the one or more processors executing the instructions to decode a master information block (MIB) or a system information block (SIB) or both a MIB and a SIB received from a base station, determine that discovery burst transmission window (DBTW) is enabled, in accordance with at least the decoded MIB or SIB, decode DBTW parameters, and execute a random access channel (RACH) procedure in accordance with the decoded DBTW parameters.

Optionally, in any of the preceding aspects, the one or more processors further execute the instructions to determine in response to the DBTW being enabled, that no DBTW parameters are provided, and execute a RACH procedure in accordance with default DBTW parameters in response to determining that no DBTW parameters are provided.

Optionally, in any of the preceding aspects, the one or more processors further execute the instructions to determine that DBTW has signal quality reporting, and report SS physical broadcast channel/channel state information reference signal (SSB/CSI-RS) quality.

Optionally, in any of the preceding aspects, the one or more processors further execute the instructions to execute a RACH procedure in accordance without DBTW in response to determining that DBTW is not enabled.

In accordance with yet another embodiment, a user equipment (UE) is provided. The UE comprises a non-transitory memory storage comprising instructions and one or more processors in communication with the memory storage, the one or more processors executing the instructions to decode a master information block (MIB) or a system information block (SIB) or both a MIB and a SIB received from a base station, determine that a listen before talk (LBT) configuration is a default LBT cell configuration, in accordance with at least the decoded MIB or SIB, and transmit a message using a directional LBT procedure in response to determining that an LBT configuration is a default LBT cell configuration. Optionally, in any of the preceding aspects, the one or more processors further execute the instructions to determine that an LBT configuration is not a default LBT cell configuration, and transmit a message using a directional LBT procedure in accordance with at least the decoded MIB or SIB.

Optionally, in any of the preceding aspects, the one or more processors further execute the instructions to transmit the message without performing an LBT procedure.

Optionally, in any of the preceding aspects, the one or more processors further execute the instructions to receive a message from the base station, detecting a change in LBT, and transmit a second message using a directional LBT procedure in accordance with the changed LBT.

Optionally, in any of the preceding aspects, the one or more processors further execute the instructions to receive a message from the base station, determine that there is no change in LBT, and transmit a second message using a directional LBT procedure in accordance with at least the decoded MIB or SIB.

In accordance with yet another embodiment, a user equipment (UE) is provided. The UE comprises a non-transitory memory storage comprising instructions and one or more processors in communication with the memory storage, the one or more processors executing the instructions to decode a master information block (MIB) or a system information block (SIB) or both a MIB and a SIB received from a base station, determine that a listen before talk (LBT) configuration is a default LBT configuration, in accordance with at least the decoded MIB or SIB, and transmit a message using a directional LBT procedure in response to determining that an LBT configuration is a default LBT configuration. Optionally, in any of the preceding aspects, the one or more processors further execute the instructions to determine that an LBT configuration is not a default LBT configuration, and transmit a message using a directional LBT procedure in accordance with at least the decoded MIB or SIB.

Optionally, in any of the preceding aspects, the one or more processors further execute the instructions to determine that an LBT configuration is not a default LBT configuration, and transmit a message without using any LBT procedure.

Optionally, in any of the preceding aspects, the one or more processors further execute the instructions to receive a message from the base station, determine that a message LBT is a short signal, and transmit a third message in accordance with a fallback type LBT in response to the expiry of a timer for short signal. Optionally, in any of the preceding aspects, the one or more processors further execute the instructions to determine that a message LBT is not a short signal, and transmit a third message in accordance with the LBT configuration.

Optionally, in any of the preceding aspects, the one or more processors further execute the instructions to receive a message from the base station, determine that a message LBT is a short signal, and transmit a third message without any LBT in response to determining that a timer for short signal has not expired. In accordance with yet another embodiment, a user equipment (UE) is provided. The UE comprises a non-transitory memory storage comprising instructions and one or more processors in communication with the memory storage, the one or more processors executing the instructions to identify multiple synchronization signal/physical broadcast channel (SS/PBCH) and channel state information reference signal (CSI-RS) directions in accordance with multi-direction initial access being enabled, execute a listen before talk (LBT) procedure in multiple directions, and transmit a first message in the multiple directions, wherein each preamble in the first message corresponds at least to a SS/PBCH block (SSB) or CSI-RS. Optionally, in any of the preceding aspects, the one or more processors further execute the instructions to receive a plurality of second messages from a base station in response to the transmission of the first message, execute a directional LBT procedure in response to receiving the plurality of second messages, and transmit one or more third messages wherein the UE identifies itself as the unique transmitter of the first message.

Optionally, in any of the preceding aspects, the one or more processors further execute the instructions to receive one or more fourth messages from the base station in response to the transmission of the one or more third messages, and transmit to the base station, a hybrid automatic repeat request/acknowledgement (HARQ/ACK), the HARQ/ACK indicating a map of fourth messages that were successfully received by the UE.

In accordance with yet another embodiment, a method for operating a transmission-reception point (TRP) is provided. The method comprises receiving multiple MSG1, executing a listen before talk (LBT) procedure in multiple directions in accordance with the received multiple MSG1, the LBT procedure indicating a first set of successful LBT directions, transmitting one or more MSG₂ in accordance with the first set of successful LBT directions, receiving one or more MSG3, determining if the one or more MSG3 map to the same UE, executing a LBT procedure in accordance with the directions associated to multiple UEs in response to determining that the one or more MSG3 do not map to the same UE, the LBT procedure indicating a second set of successful LBT directions, and sending one or more MSG₄ to multiple UEs in accordance with the second set of successful LBT directions.

Optionally, in any of the preceding aspects, the method for operating a TRP further comprises merging identities of the one or more MSG3 to a single UE in response to determining that the one or more MSG3 map to a single UE, executing a LBT procedure in accordance with the directions associated to the single UE, the LBT procedure indicating a third set of successful LBT directions, sending MSG₄ to the single UE in accordance with the third set of successful LBT directions, and receiving a hybrid automatic repeat request/acknowledgement (HARQ/ACK), the HARQ/ACK comprising a map of successful MSG4.

In accordance with yet another embodiment, a transmission-reception point (TRP) is provided. The TRP comprises a non-transitory memory storage comprising instructions and one or more processors in communication with the memory storage, the one or more processors executing the instructions to receive multiple MSG1, execute a listen before talk (LBT) procedure in multiple directions in accordance with the received multiple MSG1, the LBT procedure indicating a first set of successful LBT directions, transmit one or more MSG₂ in accordance with the first set of successful LBT directions, receive one or more MSG3, determine if the one or more MSG3 map to the same UE, execute a LBT procedure in accordance with the directions associated to multiple UEs in response to determining that the one or more MSG3 do not map to the same UE, the LBT procedure indicating a second set of successful LBT directions, and send one or more MSG₄ to multiple UEs in accordance with the second set of successful LBT directions.

Optionally, in any of the preceding aspects, the one or more processors further execute the instructions to merge identities of the one or more MSG3 to a single UE in response to determining that the one or more MSG3 map to a single UE, execute a LBT procedure in accordance with the directions associated to the single UE, the LBT procedure indicating a third set of successful LBT directions, send MSG₄ to the single UE in accordance with the third set of successful LBT directions, and receive a hybrid automatic repeat request/acknowledgement (HARQ/ACK), the HARQ/ACK comprising a map of successful MSG4. Technical advantages are generally achieved by embodiments of this disclosure which describe protocol and methods for initial channel access incorporating directional LBT. These embodiments enable flexible initial channel access based on the spectrum regulations and traffic characteristics, robust initial access and lower initial latency and an early refinement of beam selection for high frequency communication.

### BRIEF DESCRIPTION OF THE DRAWINGS

For a more complete understanding of the present disclosure, and the advantages thereof, reference is now made to the following descriptions taken in conjunction with the accompanying drawings, in which:
Figure 1 illustrates an example wireless communications system according to example embodiments described herein;
Figure 2 illustrates an example communications system providing mathematical expressions of signals transmitted in the communications system;
Figures 3A and 3B illustrate block diagrams of embodiments of systems for analog beamsteering and digital beamforming;
Figure 4A illustrates a diagram of a wide beam pattern with a small number of antennas in low frequency;
Figure 4B illustrates a diagram of a narrow beam pattern with a large number of antennas in high frequency;
Figure 5 illustrates a diagram of the transition between UE modes of operation;
Figure 6 illustrates a diagram of system information provisioning;
Figure 7 illustrates a diagram of the main steps of random access procedures;
Figure 8 illustrates a diagram of Master Information Block (MIB) synchronization with a UE;
Figure 9 illustrates a diagram of a method for a UE using the LBT/no-LBT configuration according to example embodiments disclosed herein;
Figure 10 illustrates a diagram of a method for a UE initial channel access with directional LBT including a duration of validity according to example embodiments disclosed herein;
Figure 11 illustrates a diagram of a UE method for DBTW according to the invention;
Figure 12 illustrates a diagram of an example embodiment of a discovery burst disclosed herein;
Figure 13 illustrates a diagram of the PRACH preamble association to CSI-RS split in subsets corresponding to SSB and CSI-RSs in the DB;
Figure 14 illustrates a diagram of a method for a UE when the MSG1 is based on CSI-RS according to example embodiments disclosed herein;
Figure 15 illustrates a diagram of a method for a UE sending MSG1 in multiple directions according to example embodiments disclosed herein;
Figure 16 illustrates a diagram of an example embodiment of a UE reply with a single ACK message that acknowledges multiple MSG₄ disclosed herein;
Figure 17 illustrates a diagram of a method for a gNB merging multiple MSG1 sent from the same UE in a single identity according to example embodiments disclosed herein;
Figure 18 illustrates a diagram of a method for a UE sending multiple MSG1 in a single identity according to example embodiments disclosed herein;
Figure 19 illustrates a diagram of an example embodiment for multi-direction sensing and transmissions for initial channel access disclosed herein;
Figure 20 illustrates a block diagram of an embodiment processing system; and
Figure 21 illustrates a block diagram of an embodiment transceiver.

Corresponding numerals and symbols in the different figures generally refer to corresponding parts unless otherwise indicated. The figures are drawn to clearly illustrate the relevant aspects of the embodiments and are not necessarily drawn to scale.

### DETAILED DESCRIPTION OF ILLUSTRATIVE EMBODIMENTS

The making The structure and use of disclosed embodiments are discussed in detail below. It should be appreciated, however, that the present disclosure provides many applicable concepts that can be embodied in a wide variety of specific contexts. The specific embodiments discussed are merely illustrative of specific structure and use of embodiments, and do not limit the scope of the disclosure. The functions or algorithms described herein may be implemented in software in one example embodiment. The software may consist of computer executable instructions stored on computer readable media or computer readable storage device such as one or more non-transitory memories or other type of hardware based storage devices, either local or networked. Further, such functions correspond to modules, which may be software, hardware, firmware or any combination thereof. Multiple functions may be performed in one or more modules as desired, and the example embodiments described are merely examples. The software may be executed on a digital signal processor, ASIC, microprocessor, or other type of processor operating on a computer system, such as a personal computer, server or other computer system, turning such computer system into a specifically programmed machine.

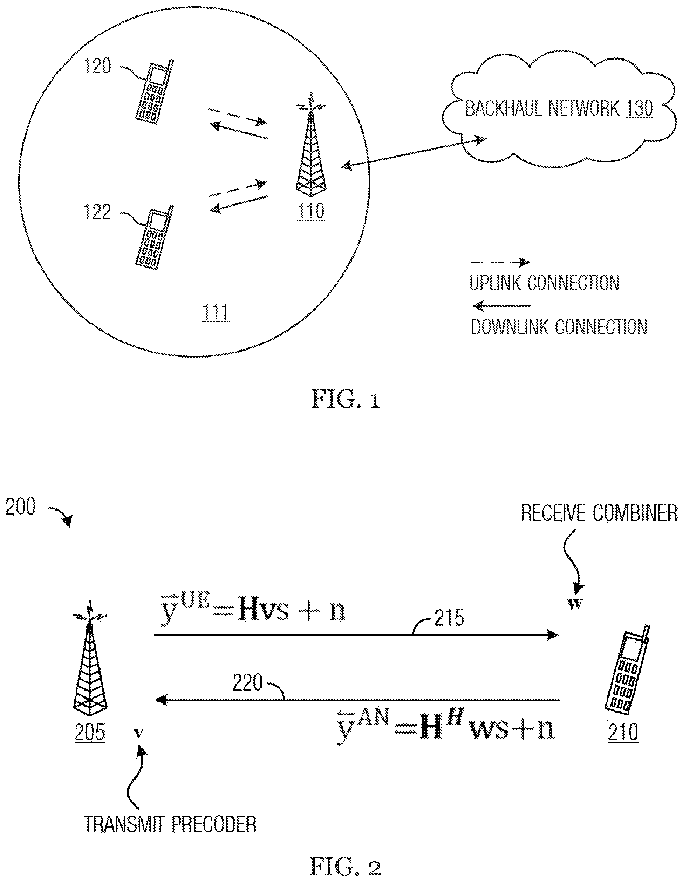

Figure 1 illustrates an example wireless communication system 100. Communication system 100 includes an access node 110 with coverage area 111. Access node 110 serves a plurality of user equipments (UEs), including UE 120 and UE 122. Transmissions from access node 110 to a UE is referred to as a DL transmission and occurs over a downlink channel (shown in Figure 1 as a solid arrowed line), while transmissions from a UE to access node 110 is referred to as an UL transmission and occurs over an uplink channel (shown in Figure 1 as a dashed arrowed line). Services may be provided to the plurality of UEs by service providers connected to access node 110 through a backhaul network 130, such as the Internet. The wireless communication system 100 may include multiple distributed access nodes 110.

In a typical communications system, there are several operating modes. In a cellular operating mode, communications to and from the plurality of UEs go through access node 110, while in device to device communications mode, such as proximity services (ProSe) operating mode, for example, direct communication between UEs is possible. Access nodes may also be commonly referred to as Node Bs, evolved Node Bs (eNBs), next generation (NG) Node Bs (gNBs), master eNBs (MeNBs), secondary eNBs (SeNBs), master gNBs (MgNBs), secondary gNBs (SgNBs), network controllers, control nodes, base stations, access points, transmission points (TPs), transmission-reception points (TRPs), cells, carriers, macro cells, femtocells, pico cells, relays, customer premises equipment (CPE), and so on. UEs may also be commonly referred to as mobile stations, mobiles, terminals, users, subscribers, stations, communication devices, CPEs, relays, Integrated Access and Backhaul (IAB) relays, and the like. It is noted that when relaying is used (based on relays, picos, CPEs, and so on), especially multihop relaying, the boundary between a controller and node controlled by the controller may become blurry, and a dual node (either the controller or the node controlled by the controller) deployment where a first node that provides configuration or control information to a second node is considered to be the controller. Likewise, the concept of UL and DL transmissions can be extended as well.

A cell may include one or more bandwidth parts (BWPs) for UL or DL allocated for a UE. Each BWP may have its own BWP-specific numerology and configuration. It is noted that not all BWPs need to be active at the same time for the UE. A cell may correspond to one or more carriers. Typically, one cell (a primary cell (PCell) or a secondary cell (SCell), for example) is a component carrier (a primary component carrier (PCC) or a secondary CC (SCC), for example). For some cells, each cell may include multiple carriers in UL, one carrier is referred to as an UL carrier or non-supplementary UL (non-SUL) UL carrier which has an associated DL, and other carriers are called a supplementary UL (SUL) carriers which do not have an associated DL. A cell, or a carrier, may be configured with slot or subframe formats comprised of DL and UL symbols, and that cell or carrier is seen as operating in time division duplexed (TDD) mode. In general, for unpaired spectrum, the cells or carriers are in TDD mode, and for paired spectrum, the cells or carrier are in a frequency division duplexed (FDD) mode. Access nodes may provide wireless access in accordance with one or more wireless communication protocols, e.g., long term evolution (LTE), LTE advanced (LTE-A), 5G, 5G LTE, 5G NR, High Speed Packet Access (HSPA), Wi-Fi 802.11a/b/g/n/ac, etc. While it is understood that communications systems may employ multiple access nodes capable of communicating with a number of UEs, only one access node, and two UEs are illustrated for simplicity. Figure 2 illustrates an example communications system 200, providing mathematical expressions of signals transmitted in the communications system. Communications system 200 includes an access node 205 communicating with a UE 210. As shown in Figure 2, access node 205 is using a transmit filter v and UE 210 is using a receive filter **w.** Both access node 205 and UE 210 use linear precoding or combining. Assuming **H** is Nᵣₓ x Nₜₓ matrix of a multiple-input multiple-output (MIMO) system, i.e., there are Nₜₓ transmit antennas and Nᵣₓ receive antennas. The transmit filter v of dimension Nₜₓ x Ns enables the transmitter to precode or beamform the transmitted signal, where Ns is the number of layers, ports, streams, symbols, pilots, messages, data, or known sequences transmitted. The receive filter **w** of multi-antenna systems is of dimension Nᵣₓ x Ns and represents the combining matrix, which is usually applied on the received signal **y** according to **w*^{H}*y.** The above description is for a transmission from access node 205 to UE 210, i.e., a DL transmission. The transmission may also occur at the reverse direction (an UL transmission), for which the channel matrix becomes **H*^{H}*** in the case of TDD (where **H*^{H}*** is the Hermitian of channel model **H),** and **w** may be seen as the transmit filter and v as the receiver filter. The **w** for transmission and the **w** for reception may or may not be the same, and likewise for **v.**

A DL (or forward) channel 215 between access node 205 and UE 210 has channel model or response **H,** while an UL (or backward, or reverse) channel 220 between UE 210 and access node 205 has channel model or response **H*^{H}*.** (Another convention is that the UL channel is denoted as H*^{T}*, which is the transposition of channel model **H**)**.** Although Figure 2 depicts only one access node and one UE, communication system 200 is not limited to this case. Multiple UEs may be served by the access node, on different time-frequency resources (such as in frequency division multiplexed-time division multiplexed (FDM-TDM) communication systems, as in typical cellular systems) or on the same time-frequency resources (such as in multi-user MIMO (MU-MIMO) communication systems, wherein multiple UEs are paired together and transmissions to each UE are individually precoded). Among the paired UEs, there is intra-cell interference.

Also, multiple access nodes may exist in the network, some of which may be cooperatively serving UE 210 in a joint transmission fashion (such as in coherent joint transmission, non-coherent joint transmission, coordinated multipoint transmission, etc.), a dynamic point switching fashion, and so on. Some other access nodes may not serve UE 210 and their transmissions to their own UEs cause inter-cell interference to UE 210. The scenario of multiple access nodes and multiple UEs, with access node cooperation to serve a UE and with MU-MIMO, is a scenario considered herein.

A way to increase the network resources is to utilize more and more usable spectrum resources, which includes not only the licensed spectrum resources of the same type as the macro, but also the licensed spectrum resources of different type as the macro (e.g., the macro is a FDD cell but a small cell may use both FDD and TDD carriers), as well as unlicensed spectrum resources and shared-licensed spectrums; some of the spectrum resources lie in high-frequency bands, such as 6GHz to 6oGHz. The unlicensed spectrums can be used by generally any user, subject to regulation requirements. The shared-licensed spectrums are also not exclusive for an operator to use. Traditionally the unlicensed spectrums are not used by cellular networks as it is generally difficult to ensure quality of service (QoS) requirements. Operating on the unlicensed spectrums mainly include wireless local area networks (WLAN), e.g. the Wi-Fi networks. Due to the fact that the licensed spectrum is generally scarce and expensive, utilizing the unlicensed spectrum by the cellular operator may be considered. Note that on high-frequency bands and unlicensed/shared-licensed bands, typically TDD is used and hence the channel reciprocity can be exploited for the communications.

On unlicensed spectrum, generally there is no pre-coordination among multiple nodes operating on the same frequency resources. Thus, a contention-based protocol (CBP) may be used. According to Section 90.7 of Part 90 (paragraph 58) of the United States Federal Communication Commission (FCC), CBP is defined as:
CBP --- "A protocol that allows multiple users to share the same spectrum by defining the events that must occur when two or more transmitters attempt to simultaneously access the same channel and establishing rules by which a transmitter provides reasonable opportunities for other transmitters to operate. Such a protocol may consist of procedures for initiating new transmissions, procedures for determining the state of the channel (available or unavailable), and procedures for managing retransmissions in the event of a busy channel."

Note that the state of a channel being busy may also be called as channel unavailable, channel not clear, channel being occupied, etc., and the state of a channel being idle may also be called as channel available, channel clear, channel not occupied, etc.

One of the most used CBP is the "listen before talk" (LBT) operating procedure in IEEE 802.11 or WiFi (which can be found in, e.g., "Wireless LAN medium access control (MAC) and physical layer (PHY) specifications," IEEE Std 802.11-2007 (Revision of IEEE Std 802.11-1999)), which is hereby incorporated herein by reference in its entirety. It is also known as the carrier sense multiple access with collision avoidance (CSMA/CA) protocol. Carrier sensing is performed before any transmission attempt, and the transmission is performed only if the carrier is sensed to be idle, otherwise a random backoff time for the next sensing is applied. The sensing is generally done through a CCA procedure to determine if the in-channel power is below a given threshold.

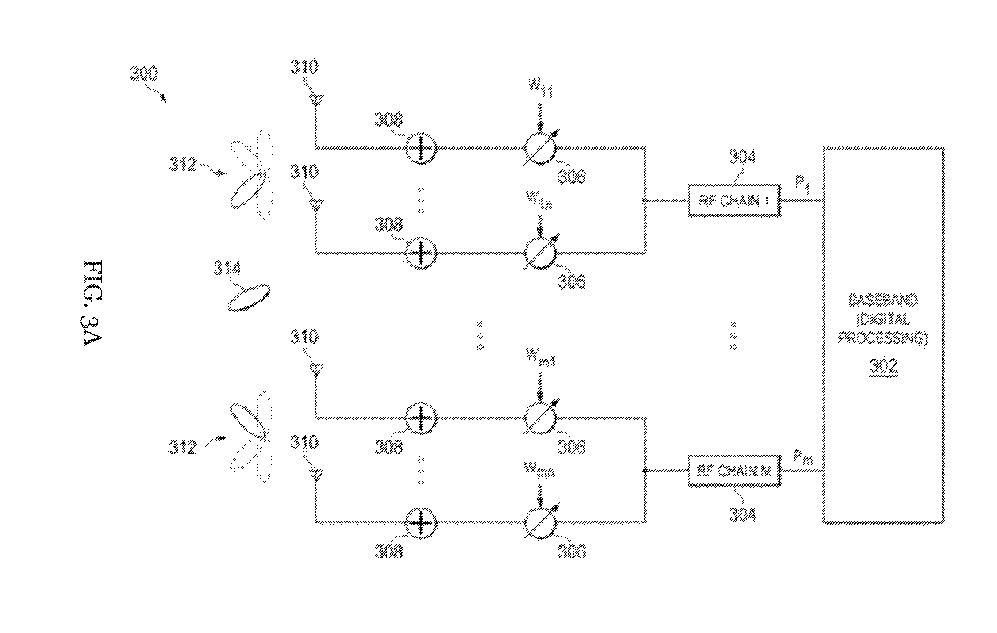

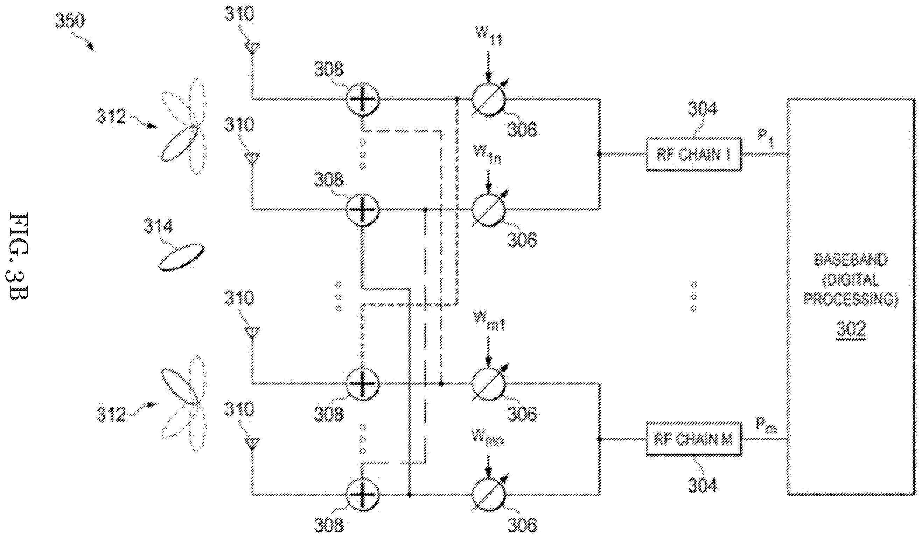

Figures. 3A and 3B are block diagrams of embodiments of systems 300 and 350 for analog beamsteering plus digital beamforming. System 300 in Figure 3A includes a baseband component 302 for digital processing, a plurality of RF chain components 304, a plurality of phase shifters 306, a plurality of combiners 308, and a plurality of antennas 310. The diagram may be used for transmission or receiving. For simplicity, we describe the diagram assuming this is for transmission; receiving may be understood similarly. Each RF chain 304 receives a weighting factor (or weight, p1, ..., pm as shown in the figure) from the baseband component 302. The collection of the weighting factors forms the digital precoding vector, precoding matrix, beamforming vector, or beamforming matrix for the transmission. For example, a precoding vector may be [p1, ..., pm]. When multiple layers/streams are transmitted, a precoding matrix may be used by the baseband unit to generate the weighting factors, which each column (or row) of the matrix is applied to a layer/stream of the transmission. Each RF chain 304 is coupled to a plurality of phase shifters 306. The phase shifters may, theoretically, apply any phase shift values, but generally in practice, only a few possible phase shift values, e.g., 16 or 32 values. Each RF chain 304 generates a narrow beam 312 oriented in a direction determined by the settings on the phase shifters 306 and combiners 308. If the phase shifters can apply any phase shift values, the beam may point to any direction, but if only a few phase shift values can be used, the beam may be one of few possibilities (e.g., in the figure, the solid narrow beam is selected by setting a specific phase shift value in the RF chain, and the beam is among all the possible narrow beams shown as solid and dotted beams corresponding to all the possible phase shift values). Each RF chain selects such a narrow beam, and all such narrow beams selected by all the RF chains will be further superposed. How the superposition is done is based on the digital weighting factors. The factor can make a beam from a RF chain stronger or weaker, and therefore, a different set of the factors can generate different superpositions in the spatial domain; in the figure, a particular beam 314 is illustrated. In other words, by selecting different digital weighting factors, different beam 314 can be generated. The digital operations may generally refer to as (digital) beamforming or precoding, and the analog operations as (analog) beamsteering or phase shifting, but sometimes there is no clear distinctions.

System 350 in Figure 3B is similar to system 300 in Figure 3A except that corresponding combiners 308 in each RF chain 302 are connected to one another.

To meet the regulatory requirements of operating in the unlicensed spectrum and to co-exist with other radio access technologies (RATs) such as Wi-Fi, the transmissions on the unlicensed spectrum cannot be continuous or persistent in time. Rather, on/off, or opportunistic transmissions and measurements on demand may be adopted.

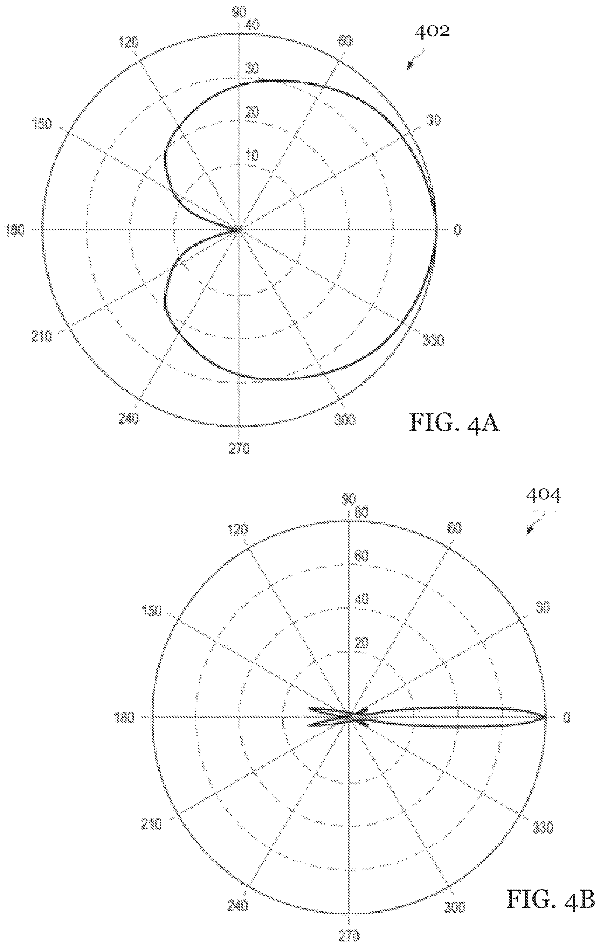

In addition, for operations in high-frequency bands, especially in the bands at 28GHz to 6oGHz, they generally belong to the mmWave regime, which has quite different propagation characteristics from microwave (generally below 6GHz). For example, mmWave experiences higher pathloss over distance than microwave does. Therefore, high-frequency bands are more suitable for small cell operations than macro cell operations, and they generally rely on beamforming with a large number of antennas (e.g. >16, and sometimes maybe even a few hundred) for effective transmissions. Note that at high frequency, the wavelengths, antenna sizes, and antenna spacing can all be smaller than those at low frequency, thus making it feasible to equip a node with a large number of antennas. As a result, the beams formed by the large number of antennas can be very narrow, for example, with beamwidth of 10 deg or even less. In sharp contrast, in traditional wireless communications, beamwidth is generally much wider, such as tens of degrees. See Figure 4A for an illustration of the wider beam pattern 402 with a small number of antennas in low frequency, and Figure 4B for an illustration of the narrow beam pattern 404 with a large number of antennas in high frequency. In general, it is regarded that narrow beams are a major new feature of mmWaves. As a general rule of thumb, the beamforming gain by massive MIMO can be roughly estimated by N x K, where N is the number of transmit antennas and K the receive antennas. This is because the 2-norm of the channel matrix H scales roughly according to (N x K)1/2, and therefore if the precoding vector by the transmitting node is p, and the combining vector by the receiving node is w, then the composite channel is w'Hp, and by properly selecting w and p, the composite channel gain in energy can attain N x K, much higher than the case with fewer antennas.

In high frequency bands, such as 6oGHz, directional communication is preferred in order to mitigate the effects of high pathloss. Therefore, when using directional communication, there are specific problems to consider, which are exacerbated in unlicensed high frequencies. When LBT operation is executed with a narrow (high gain) antenna the operation is called directional LBT.

Due to high attenuation in the mmWave band, directional antennas are used. This disclosure defines an initial access procedure for directional beam sensing and communication that allows a UE to perform initial channel access to communicate in the unlicensed band in multiple spatial directions necessary for reasons such as robustness, spatial diversity, multi-TRP and multi-link connectivity, use of directional sensing and directional communication.

The proposed solution extends the existing random-access channel access for NR to make it compatible with channel access in the unlicensed mmWave bands.

There are some geographic regions (such as the US) where the LBT procedure is not mandated for channel access. Therefore, for cases when the traffic is low or there are very few communication equipment using that channel, the LBT procedure may not be necessary. The LBT procedure may be enabled only when the channel is heavily used, or a high number of collisions was experienced. Such decision, which may be left for implementation at the base station, must be communicated to the user devices. Therefore, a wireless network should be capable of enabling or disabling the LBT procedures dynamically and inform UEs in its coverage about it.

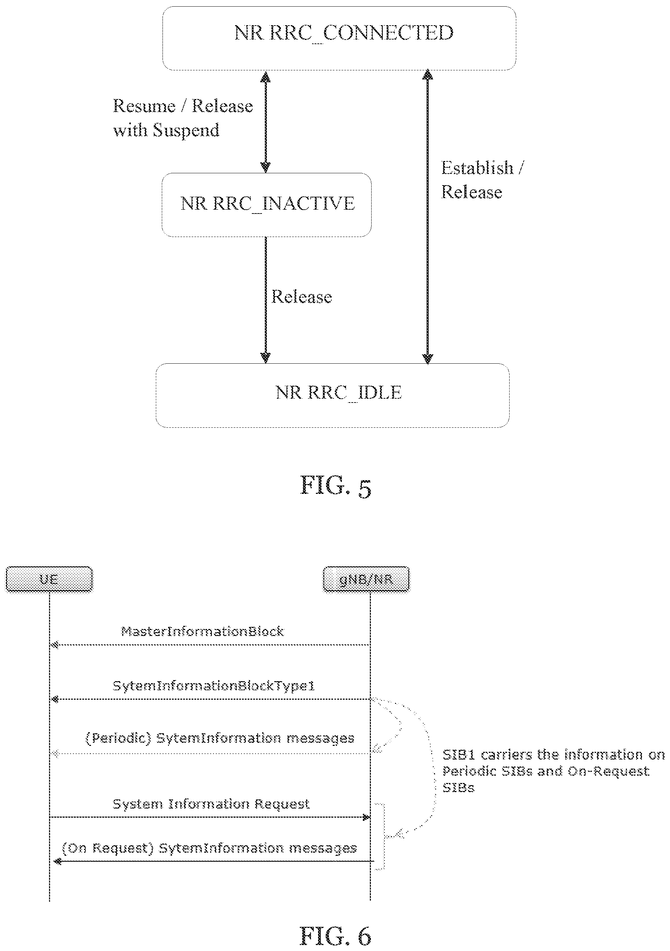

The UE may be in in any of three states. A UE is either in RRC_CONNECTED ("connected") state or in RRC_INACTIVE ("inactive") state when an RRC connection has been established. If this is not the case, i.e. no RRC connection is established, the UE is in the RRC_IDLE ("idle") state. In the RRC_IDLE state, the UE performs neighboring cell measurements, cell (re)selection, acquires system information (SI) and can send SI request (if configured). The transition between UE modes of operation is shown in Figure 5. Initial channel access is defined as the set of procedures executed by UE for cell search and cell selection. For cell selection process, on each frequency, the UE only needs to search for the strongest cell, except for operation with shared spectrum channel access where the UE may search for the next strongest cell(s). Once a suitable cell is found, this cell shall be selected.

Cell search is the procedure for a UE to acquire time and frequency synchronization with a cell and to detect the physical layer Cell ID of the cell.

A UE assumes that reception occasions of a physical broadcast channel (PBCH), PSS, and SSS are in consecutive symbols and form a SS/PBCH block. One or multiple SS/PBCH blocks compose a SS/PBCH set. A SS/PBCH set is confined to a 5ms window, which repeats periodically. For initial cell selection, the user equipment (UE) assumes a default SS/PBCH set periodicity of 20 ms. Synchronization during initial access is a two-step identification process (via PSS and SSS) to provide for both timing (only symbol and slot) and frequency synchronization. Decoding the master information block (MIB) after demodulating the PBCH provides system frame number and enables reception of control/data channels (PDCCH/PDSCH). Detection of SIB1 (transmitted over PDCCH/PDSCH) may be necessary during initial access for UE to perform random access (via PRACH).

For operation with shared spectrum channel access, a UE assumes that transmission of SS/PBCH blocks in a half frame (5ms) is within a discovery burst transmission window that starts from the first symbol of the first slot in a half-frame.

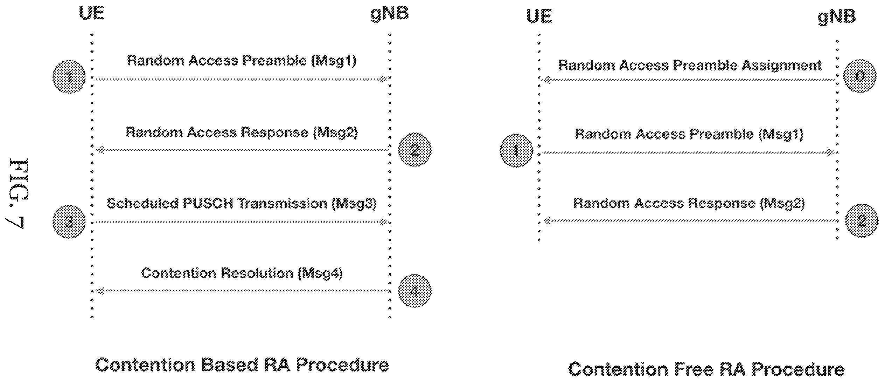

The UE assumes that one or more SS/PBCH blocks indicated by *ssb-PositionsInBurst* may be transmitted within the discovery burst transmission window and have candidate SS/PBCH blocks indices corresponding to SS/PBCH block indices provided by *ssb-PositionsInBurst.* The value of *rsrp-ThresholdSSB* indicates an RSRP threshold for the selection of the SSB for the 4-step RA type (type 1). Similarly, for the 2-step RA, the field *msgA-RSRP-ThresholdSSB* provides an RSRP threshold for the selection of the SSB for the 2-step RA type (type 2). System information provisioning and he main steps of random access are shown in Figures 6 and 7.

After the UE selects a SSB (SS/PBCH block), the UE sends a RACH preamble in a PRACH occasion. There are RACH preamble formats defined for NR (A₁-A₃, B₁-B₄, Co, C₁). The duration of the RACH preamble varies between 2 and 12 symbols within the same slot, the PRACH slot. The preamble transmission can take place in a configurable subset of slots (PRACH slots) that repeats every PRACH configuration period. The PRACH configuration period can be configured in a range from 10ms to 160ms. Within a PRACH slot multiple PRACH occasions can exist consecutively in time and frequency.

The channel access in shared spectrum (unlicensed spectrum) below 6GHz relies on a discovery burst (DB) methodology. A DB refers to a DL transmission burst including a set of signal(s) and/or channel(s) confined within a window and associated with a duty cycle.

Transmission(s) initiated by a gNB that includes at least an SS/PBCH block consisting of a primary synchronization signal (PSS), secondary synchronization signal (SSS), physical broadcast channel (PBCH) with associated demodulation reference signal (DM-RS) and may also include CORESET for PDCCH scheduling PDSCH with SIB1, and PDSCH carrying SIB1 and/or non-zero power CSI reference signals (CSI-RS).

A Discovery Burst Transmission Window (DBWT) represent the time window when discovery bursts re transmitted.

In licensed spectrum, the transmission of SS/PBCH block is well defined in terms of timing. In unlicensed spectrum, the LBT procedure prior to SS/PBCH transmission is not guaranteed to succeed, therefore the gNB may skip their transmission until the channel becomes available.

Depending on the DB duration the type of LBT is also different. Full LBT (Type 1 DL LBT) is required to be done for longer DB i.e. in case of a transmission(s) initiated by a gNB with only discovery burst or with discovery burst multiplexed with non-unicast information, where the transmission(s) duration is larger than 1ms or the transmission causes the discovery burst duty cycle to exceed 1/20.

A short deterministic short LBT (Type 2DL) is necessary when transmission(s) initiated by a gNB with only discovery burst or with discovery burst multiplexed with non-unicast information, where the transmission(s) duration is at most 1ms, and the discovery burst duty cycle is at most 1/20.

In unlicensed band (below 6GHz) the DBTW is always present. There is no enable/disable operation, and NR-U always performs in the same way with respect to DBTW. More specifically, the UE behavior for NR-U during DBTW in < 6GHz unlicensed band is specified in TS 38.213 as follows:
"For operation with shared spectrum channel access, a UE assumes that transmission of SS/PBCH blocks in a half frame (5ms) is within a discovery burst transmission window that starts from the first symbol of the first slot in a half-frame. The UE assumes that one or more SS/PBCH blocks indicated by ssb-PositionsInBurst may be transmitted within the discovery burst transmission window and have candidate SS/PBCH blocks indexes corresponding to SS/PBCH block indexes provided by ssb-PositionsInBurst. The ssb-PositionsInBurst is a bit map (up to 64 bit) to indicates the SS/PBCH actual transmissions. For operation with shared spectrum channel access, a UE assumes that SS/PBCH blocks in a serving cell that are within a same discovery burst transmission window or across discovery burst transmission windows are quasi co-located with respect to average gain, quasi co-location 'typeA' and 'typeD' properties, when applicable."

In the unlicensed band <6GHz the gNB may transmit in fewer SS/PBCH transmit opportunities due to LBT failure. In the licensed band, the gNB transmits in every opportunity of SS/PBCH transmission. Moreover, in the licensed band, the number of transmissions opportunities of SS/PBCH block is smaller than those for SS/PBCH in unlicensed spectrum in the same time duration of 5ms DBTW.

In current implementations, the random-access procedure may be affected by the LBT failure at each step. A robust initial channel access approach is necessary that allows continuation despite the fact that some spatial directions are affected by interference.

The existing procedure relies on a selection of a single SSB direction. Nevertheless, when UE sends MSG1 (PRACH), this direction may be found busy when using directional LBT, despite the fact that other available directions which satisfy the SSB RSRP threshold may be available and used.

In the mmWave unlicensed bands, when sending a random-access preamble (MSG1) in a single PRACH opportunity (PO) there is an increased risk that it would not be received at the gNB due to additional pathloss and interference from other users sharing the same bands. The additional pathloss is caused by the higher frequency and possible misalignment between the transmitter beam and the receiver beam, Repeating the MSG1 in multiple UL directions would increase the chances of gNB correctly receiving MSG1.

When gNB replies with a MSG2, if a single spatial filter (direction) it used for directional LBT, the chances are that the LBT may fail. Using multiple directional LBTs and multiple directions MSG 2 transmissions provide additional robustness. Similarly, for MSG3 and MSG 4.

For directional LBT signaling for initial access, the gNB should be capable to inform UE about the LBT mandatory usage, as well as of the type of LBT prior or during the initial channel access steps, while UE is in the RRC_IDLE state, as well as later on when UE is in either RRC_CONNECTED or RRC_INACTIVE state. In the disclosure we address multiple issues related to initial channel access in mmWave unlicensed band.

In one embodiment the LBT procedure for the first step of random access (MSG1) transmission should be used as the default procedure. For instance, UE may execute a short deterministic LBT prior to MSG1 transmission, or a full LBT. The LBT procedure should cover the direction(s) of MSG1 transmissions.

In a different embodiment, the default channel access for UE for MSG1 (RACH preamble) transmission is considered as a short control signaling and therefore UE does not execute LBT prior to MSG1 transmission. To satisfy the short control signaling the duty cycle of the transmission shall be less or equal to 10%. Therefore, the total transmissions duration for this operation in a 100ms time interval should not be longer than 10ms. This could be easily met given that the duration of MSG1 and MSG3 are less than one slot each (one slot duration at 120 kHz SCS is 125 us) even with multiple repetitions.

In a preferred embodiment, when either the LBT procedure or the short control signaling are not the default modes of UE operation for MSG1, the gNB should be able to inform UE that LBT is enabled or disabled prior to MSG1 transmission.

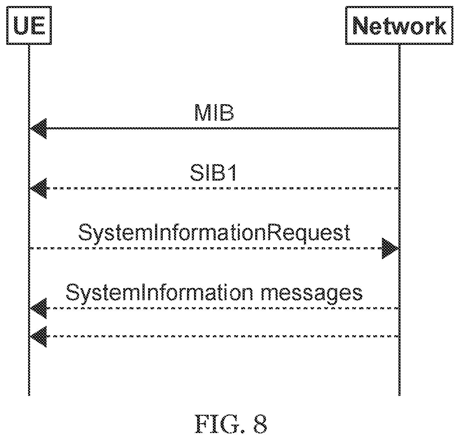

In one embodiment this can be done in Master Information Block (MIB) that can signal that the LBT is enabled via a single bit field, as illustrated in Figure 8. For instance, if there is a single SCS (subcarrier spacing) common (for instance 120 kHz), the bit of *subCarrierSpacingCommon* in MIB could be (re) used for signaling the LBT is enabled or not as shown below.

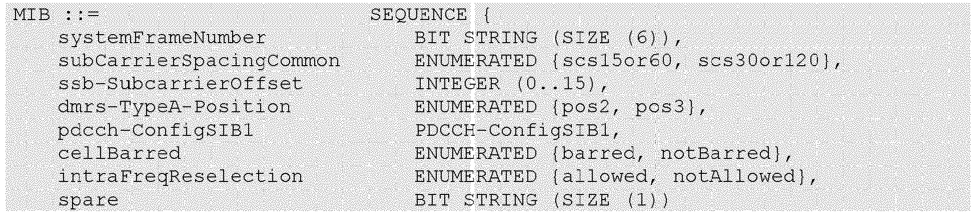

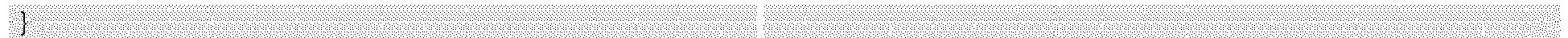

The *subCarrierSpacingCommon* value of scs150r60 signals that LBT is mandatory (enabled), and scs300r120 signals that the LBT is not required (No LBT enabled)).

When the LBT is enabled, the scope enablement can be decided a priori. For instance, in one embodiment the scope of the LBT enablement is only for sending MSG1 and gNB may enable the LBT procedure in its MSG 2 (RAR) response. In a different embodiment, the MIB may signal that the LBT is enabled for all operations related to the initial channel access yet in another embodiment the MIB may signal that the LBT is enabled unlimited, until UE receives a LBT disable signal.

In a preferred embodiment, the use of LBT (enabled/disabled) or equivalently the use of No LBT (enabled/disabled) may be signaled in the system information, such SIB1. For instance, new fields in CellAccessRelatedInfo may be added to signal if LBT is enabled, and the type of LBT required for MSG1 and MSG 3, as shown below.

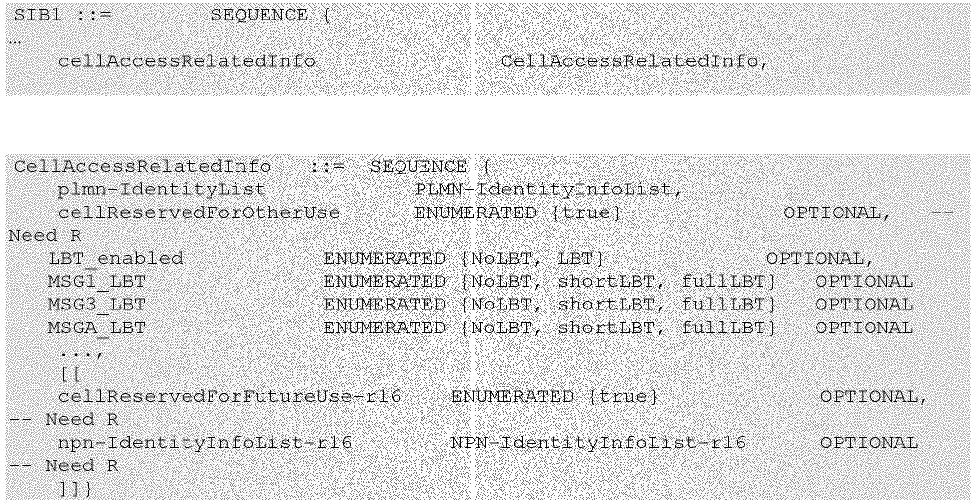

In the proposed embodiment, the value of LBT _enabled signals that the LBT is or not required after the initial access, while MSG1_LBT and MSG3_LBT specify the type of LBT for MSG1 and respectively MSG3. A similar field in SIB1 is used for two-step random access MSGA. Note that the LBT procedure required for 4-step RACH and 2-step RACH may differ.

After UE decodes the SS/PBCH, and the PDCCH (in CORESET#o), the corresponding SIB1 in PDSCH contains a field that signals the use of LBT (LBT enabled) or NoLBT (LBT disabled), and in the case of using LBT, SIB1 provides additional information regarding the type of LBT procedure for initial access. For instance, the gNB may inform/request (via SIB1) that the UE executes the one shot (shortLBT) LBT procedure before MSG1 and MSG3 in random access. In another embodiment, the gNB may signal that the UE may send MSG1 as short control signaling without using any LBT procedure (NoLBT) and MSG3 after a short (shortLBT) LBT, or MSG3 with full LBT. Or other any other combination of them.

In a different embodiment, gNB may provide the LBT configuration in SIB1 for MSG3, but this may be superseded by the LBT procedure for MSG3 provided in the MSG₂ from gNB.

For MSG2:
The UE listens the PDCCH (DCI 1_0) transmission from gNB scrambled with RA-RNTI within the period RAR-Window configured by rar-WindowLength IE in a SIB message
UE looks for PDCCH DCI in Type 1 PDCCH Common Search Space

Once UE is able to successful decode of PDCCH, it gets the RB resources information to receive the downlink transport block transmitted over PDSCH.

UE tries to decode PDSCH carrying Mgs2 Random Access Response (RAR) data and check RAPID in RAR is matches with the RAPID assigned to it
PDCCH and PDSCH transmission should be carried in same subcarrier spacing (SCS) and cyclic prefix as indicated in SIB1.

In one embodiment, the information for LBT type for MSG3 may be included either in the PDCCH for instance just in this particular instance New Data Indicator Bit may signal that the MSG₂ may be sent with no LBT or with a short LBT.

The PDCCH scrambled with RA-RNTI schedules the resources for PDSCH (Msg2). A UE parses the received PDSCH to find a particular MAC CE. The MAC CE contains the uplink grant for MSG3.

In a different embodiment, the LBT type for MSG3 is provided in the MAC CE included in the PDSCH (MSG2), for instance the field of CSI Request may be used to signal NoLBT/shortLBT.

The LBT type (NoLBT, shortLBT, fullLBT) to be used by UE after the initial channel access may be communicated by gNB either in SIB1 or in MSG₄ (a MAC CE).

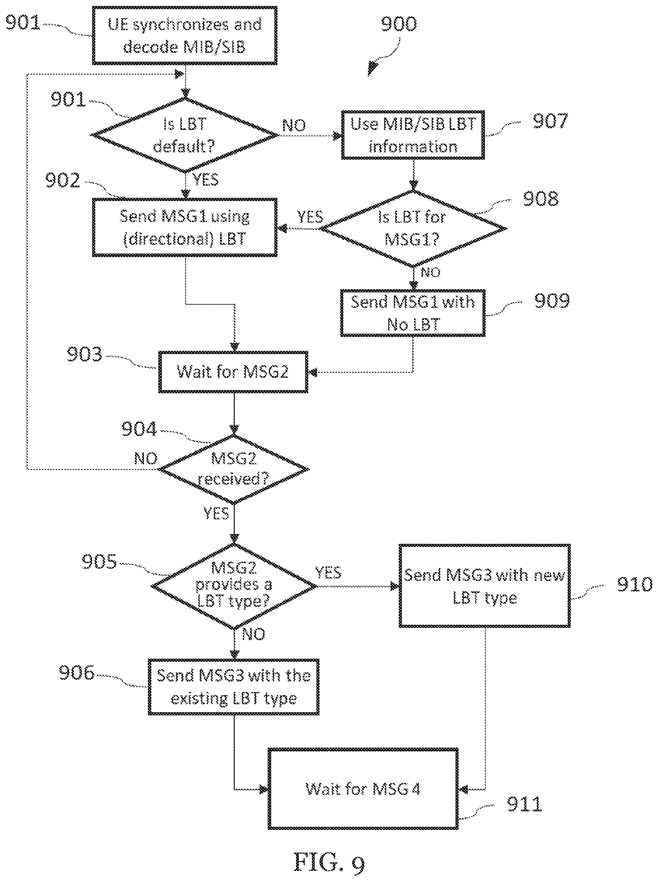

After the UE enters the connected state (RRC_CONNECTED), after initial access, the LBT configuration may be provided by the gNB in various ways such RRC configuration, dynamic configuration via DCI per each UL scheduling, or via configured grant UL for semi-persistent scheduling or periodic scheduling. Figure 9 illustrates a diagram of an embodiment method 900 for UE operation when LBT or NoLBT configuration is provided for the initial access.

In one embodiment, at step 905, MSG₂ may indicate to the UE a change in LBT configuration (for instance enabling or disabling LBT) with respect to that indicated in MIB or SIB1. The UE will apply the last received configuration for MSG3, or for further transmissions until the LBT configuration is changed. In another embodiment, the MIB information, which is provided in the SS/PBCH broadcast, may differ among the SS/PBCH transmissions in a half-frame, thus may not be the same for each directional transmission of SS/PBCH from gNB. In this case, in step 907, when the UE sends a MSG1 in the direction of SS/PBCH reception, UE should use for its directional MSG1 transmission the LBT procedure configuration information received in the MIB from that direction SS/PBCH. That is the transmitted MSG1 and MSG3 in different directions may use different LBT procedure types based on MIB/SIB and MSG₂ information regarding LBT.

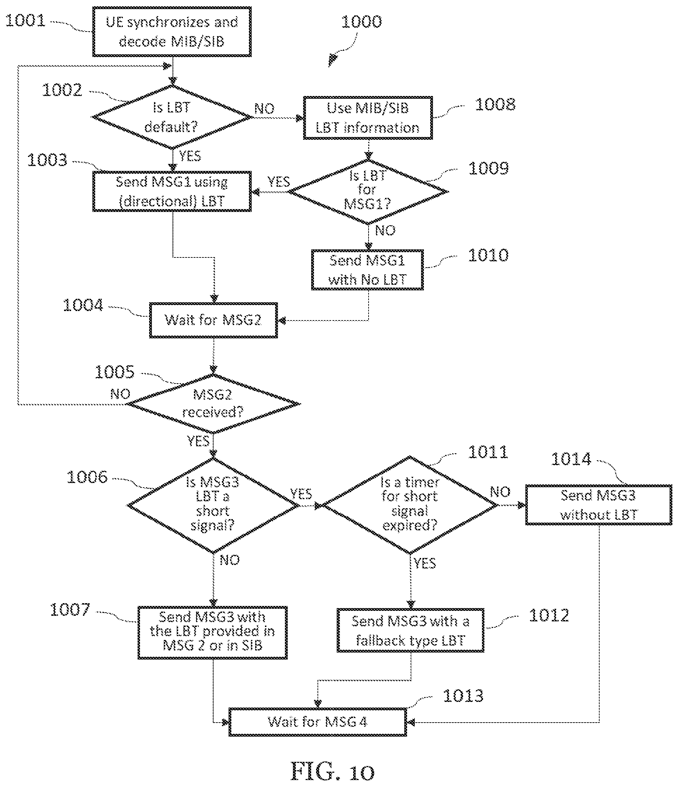

Yet, in a different embodiment illustrated in method 1000 of Figure 10, the gNB may provide a duration of validity of the LBT enablement that UE is required to use. For instance, MSG₂ may provide to UE the durations associated with different LBT procedure type. For instance, for N1 slots starting with the first slot after UE receives MSG1 UE is required to do LBT procedure type 1, and for the next N2 slots to do the LBT procedure type 2. After the expiration of N1+N2 duration, UE shall fall back to a default type of LBT (for instance full LBT). Such solution would allow, for instance, for UE transmissions to be exempt of LBT as a short control signaling for a limited duration. We note that such signaling in MSG₂ may be done in various ways in PDCCH scheduling PDSCH (MSg2), or adding a MAC CE in MSG2.

Examples of such signaling could be, for instance, gNB allow (via MIB) MSG1 to be sent with no LBT via short control signaling procedure, and in MSG₂ provides some time limit when UE is allowed to use short control signaling for MSG3. If the timer expires because UE, for instance, failed the LBT procedure, the UE may be required to use some form of LBT to send its MSG3 and further transmissions.

All transmissions in initial channel access may be considered part of RRC _INACTIVE state. In another embodiment the LBT/NoLBT policy, including for instance specifies for initial channel access type of LBT may be provided to UE in RRC_INACTIVE mode via paging channel (PCCH/PCH).

In the 3GPP RAN1 working group that is extending NR in the spectrum band of 52.6GHz to 71 GHz, it was decided that a *discovery burst transmission window* (DBTW) should be considered but not mandated. Especially for the geographical areas where LBT is not mandated by the regulators (for instance USA), the DBW should be enabled or disabled based on traffic density. For instance, US deployments, LBT may be enabled only in conditions of higher traffic. In these cases, DBW also may be enabled or disabled upon the traffic conditions. It is obvious, when LBT is not mandated, that with less traffic (interference) from outside of the network the network behavior in unlicensed spectrum maybe closer to the licensed spectrum behavior. Therefore, the network should be able to enable or disable the DBW and inform UE about it.

The present disclosure provides means to enable and disable DBTW and ways for UE to act based on this information.

In one example, which is not according to the invention, the DBTW is enabled by default when the LBT is required for the channel access. In this case UE will interpret the received SS/PBCH accordingly, including for instance QCL type D between different SS/PBCH transmissions that have the same SSB index.

In a different example, which is not according to the invention, the DBWT enablement may be announced in the paging channel. According to the invention, the DBWT enablement is announced in MIB for instance using one of the MIB reserved bits, or is provided by SIB1 or other system information blocks. If the DBTW presence is provided by SIB1 (or other system information blocks) or via RRC, additional information related to the DBTW duration and periodicity may be also provided. For instance, SIB1 may contain the fields *DBTW-Duration* ENUMERATED {oms, 1ms, 2ms, 2.5ms, 5ms}, where oms stands for DBTW disabled. Similarly, the periodicity may be provided by DBTW_Period ENUMERATED {1ms, 2ms, 4ms, 5ms, 10ms, 20ms}, where the period needs to be larger or equal to the duration of DBTW, as shown below.

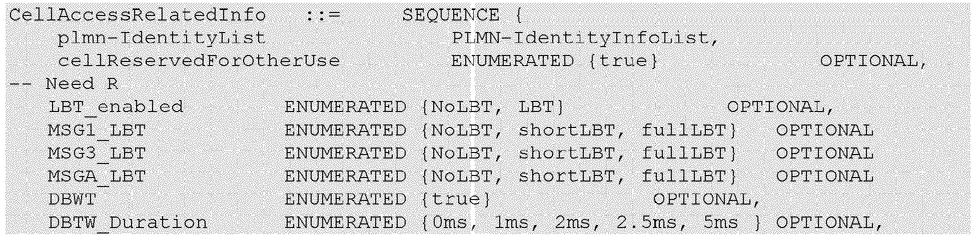

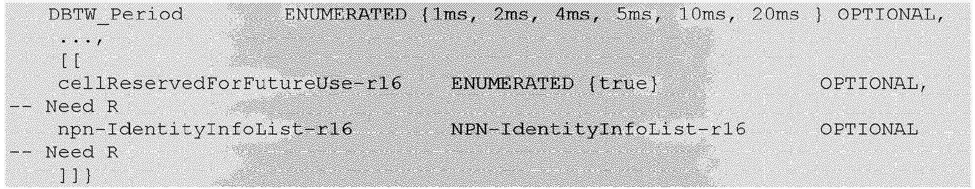

In a different embodiment, the DBTW structure may be also provisioned via SIB1. For instance, DBWT may contain CSI-RS signals together with SS-PBCH, PDCCH, PDSCH.

In this case the structure may be signaled as follows.

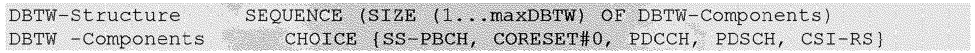

When the CSI-RSs are present in the DBTW the best CSI-RSs or the CSI-RSs measurements (RSRP) may be reported for instance in MSG3 by the UE. The SSB indexes and their strength measurements may also be reported in MSG3.

The reporting may be enabled or not in the SIB1 information regarding DBTW. For instance, 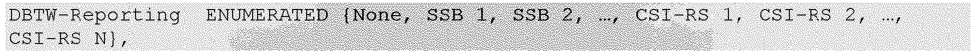 where the system information specifies the number of SSBs and or CSI-RS to be reported. In a different embodiment, the SIB provides just the thresholds for SSB and respectively for the CSI-RS to be reported. Only those SSBs and CSI-RS above their respective threshold would be reported. They can be different. UE in this case will report the indexes of SS-PBCH blocks and respectively CSI-RS that satisfy the threshold conditions. These reports may be included in MSG3 of the RACH process. Figure 11 illustrates an embodiment of DBTW in method 1100.

In the following a new method for random access when using directional sensing and directional transmission and the LBT is enabled is proposed. Several embodiments are presented.

In one embodiment, the LBT is required and Discovery Burst Transmission Window (DBWT) is enabled. The gNB may proceed with directional (for instance one shot) LBT before transmitting a Discovery Burst (DB). In this case gNB may transmit SS/PBCH only in those directions where the channel is found idle similar as in NR-U. Those LBT directions are protected for the SSB, CORESET#o, SIB1, CSI-RS and RACH transmissions. It is expected that each DB contains in addition to SS/PBCH block, the PDCCH and PDSCH carrying the SIB1 system information, all being transmitted in the same direction (QCL- type D). During the system information acquisition (for initial access), the UE gets information necessary for configuration of PRACH parameters (PRACH preamble format, time resources, frequency resources) and parameters for MSG1 generation (index to logical root sequence table, cyclic shift, set type).

Solutions for signaling and usage of CSI-RS in the initial access are disclosed in a preferred embodiment wherein the gNB, in addition to the system information (SIB1) may provide information of the DB structure, for instance the presence of CSI-RS and also an indication for UE to report in MSG3 (for instance) a number of SS/PBCH and or CSI-RS measurements the best reference signals.

When included in the DBTW the CSI-RSs signals are to be quasi co-located with respect to Doppler shift, Doppler spread, average delay, delay spread, and, when applicable, spatial Rx parameters with corresponding SSB, where the best reference signals can be defined as those with a strength above a threshold. We note that the SSB is similarly selected (above a specific threshold) as specified in some standards. In this disclosure we extend the concept and provide additional threshold for CSI-RS signal selection. The thresholds provided in SIB1 may be different for SS/PBCH block and CSI-RS signals.

In an embodiment, the SIB1 or PDSCH MSG₂ may carry the necessary information for UE to receive the CSI-RS associated with SSB like *scramblingID* or *sequenceGenerationConfig, firstOFDMSymbolInTimeDomain, and frequencyDomainAllocation,* which may be a number of limited entries in configuration tables dedicated to RACH.

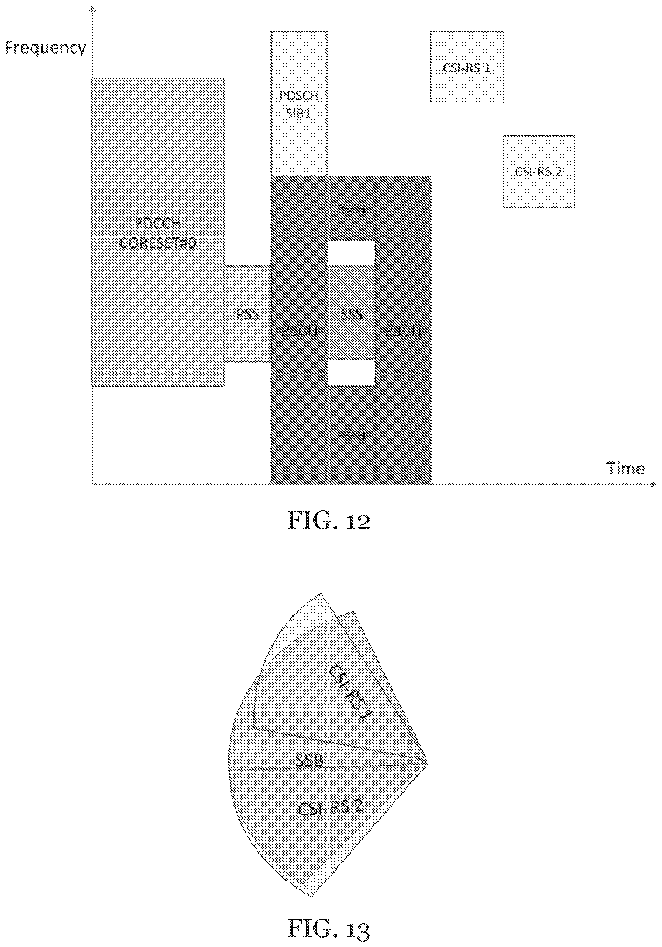

In a preferred embodiment, the scramblingID or *sequenceGenerationConfig, firstOFDMSymbolInTimeDomain, and frequencyDomainAllocation* for CSI-RS configuration are by default provided by the SSB index. For a single SSB index multiple CSI-RS may be associated, where the number of CSI-RS may be specific to the discovery burst. MSG₂ PDCCH may trigger the CSI-RS reports. In another embodiment, the SIB1 information may inform UE that different CSI-RS in the DBWT are mapped to different random preambles, thus UE may use CSI-RS associated preamble for MSG1 rather than SS/PBCH associated PRACH preambles. In this case the trigger of CSI-RS measure is provided by SSB itself. We note that because CSI-RS and SSB are quasi-collocated, no additional beam switch is necessary for CSI-RS measurement. For instance, CSR-RS1 may be mapped to the first half of the random preambles and CSI-RS2 may be mapped to the second half of CSI-RS preambles, as shown in Figure 12. This mapping can be used for beam refinement during the initial channel access stage. As shown in Figure 13, an example of the PRACH preamble association to CSI-RS may be that the set of all preambles associated to a SSB (up to 64), may be split in subsets corresponding to SSB and CSI-RSs in the DB. UE uses a PRACH preamble that is associated with a CSI-RS and it transmits that PRACH preamble with the same spatial filter used to receive the CSI -RS. Thus, UE would inform gNB about the preferred SSB beam as well as the preferred CSI-RS beam, which may be a refinement of the SSB beam.

In one embodiment, the PDCCH and PDSCH providing the system information SIB1 may carry information about COT and LBT type for UE. For instance, gNB may signal an ongoing COT, its resources and remaining duration until the COT expires. Because the SS/PBCH, CORESET#o, PDCCH, PDSCH belong to the same DB and they are QCL-D type (transmitted to the same direction), the associated COT also may be a directional COT. This implies that a responding device such as a UE performing initial access needs to respect the COT configuration as indicated in the directional SIB1 such as resources, type of LBT including the energy detection threshold, direction, and duration of COT.

A UE that performs initial channel access scans over multiple spatial directions and decode the received SS/PBCHs in the discovery bursts. The UE collect/measures multiple discovery bursts (each including SS/PBCH) and retains N multiple spatial directions associated to the best SS/PBCHs for the next steps of the random access. For instance, those directions where SS/PBCH transmissions that have the RSRP or RSSI above a threshold, where the threshold was predefined or provided by gNB SIB1 information. Based on system information received the UE may also measure the associated CSI-RS with each SS/PBCH. In one embodiment, the gNB may indicate in SIB1 to the UE that the spatial filter (direction) for UE for sending a RACH preamble (MSG1) is based (TCI-State) on either SS/PBCH block QCL-D or a CSI-RS transmitted during DB or a combination of them.

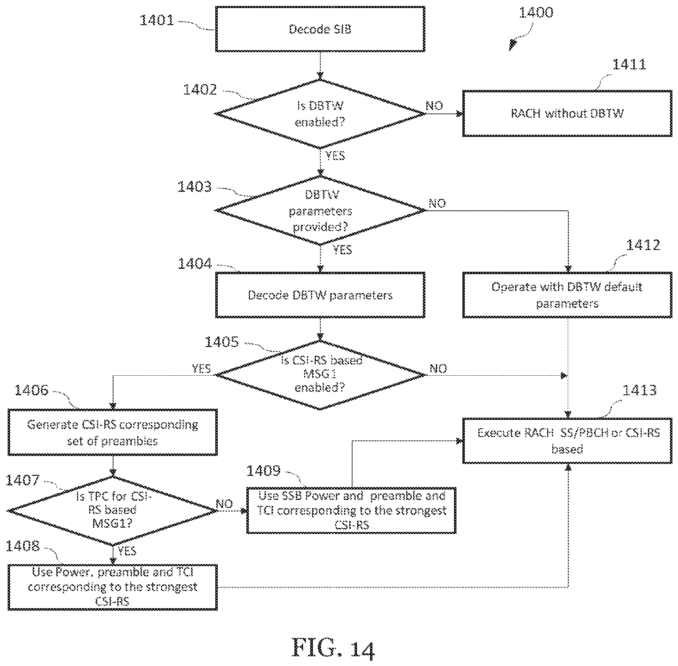

In another embodiment illustrated in method 1400 of Figure 14, when system information provides indication about the presence of CSI-RS in the DB, it also may provide a way for the generation of RACH preamble for UE MSG1. For instance, the maximum number of preambles associated with a SS/PBCH block (64 in the present NR specifications) may be split in multiple sets each set corresponding to a CSI-RS, thus when a UE generate the RACH preamble (MSG1) the RACH preamble may indicate the strongest CSI-RS associated with a SS/PBCH. While the number of preambles for a CSI-RS direction is less than 64, the CSI-RS itself may be transmitted with a narrower beam than SS/PBCH block therefore the probability of possible collisions between UE sending same preamble remains low.

When LBT is enabled (mandated), UE performs the directional LBT in those directions associated with RACH opportunities (RO) as provided in the received system information. The LBTs may be for each individual direction or several directions at once.

In a preferred embodiment, the directional LBT may be a different type (as duration/backoff window and the energy detection threshold) based on the system information (MIB, SIB1) received from that direction. Specific LBT type for specific SSB/CSI-RS is not provisioned in the NR.

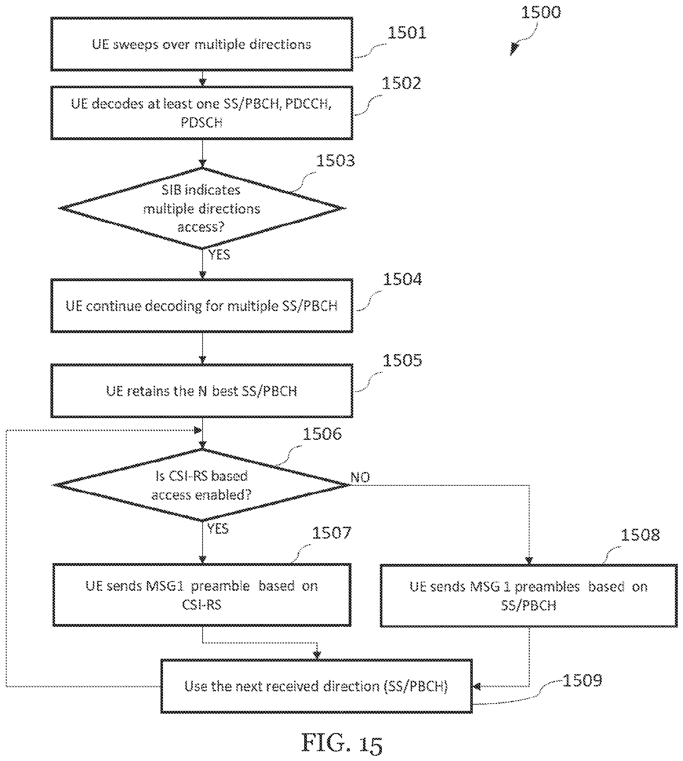

To send a RACH preamble in a RACH opportunity (RO), UE may need to execute a LBT procedure, as shown in method 1500 of Figure 15. The method is preferably to use directional LBT, where the direction used is the direction associated with corresponding SSB (or CSI-RS). If UE tries to send multiple MSG1 (RACH preambles) in different directions, it may happen that only some of those directions pass the LBT procedure (channel idle). The UE sends RACH a preamble only on the directional LBTs find an idle channel.

In this embodiment, after UE repeats the LBT and RACH preamble transmission operation up to N times, where N may be provided by the gNB in the system information block, for instance. Note, the present NR specifications and design do not forbid NR from sending multiple RACH preambles (MSG1) in different directions.

A successful MSG1 transmission is considered after successful reception of a Random Access Response containing Random Access Preamble identifiers that matches the transmitted PREAMBLE_INDEX before the expiration of ra-ResponseWindow.

In this disclosure the RAR timer associated with ra-ResponseWindow starts from the last MSG1 transmission from a sequence of multiple MSG1 transmitted in multiple directions.

This timer indicates the maximum waiting time until the Random Access Response (RAR) from gNB. If UE does not receive any RAR (MSG2) from gNB, after the timer expiry the UE may retransmit MSG1 or start monitoring the DB to discover other PRACH Opportunities.

Based on the present NR design when gNB receives one or multiple RACH preambles (MSG1) it does not know the sender identity yet. Therefore, gNB proceeds with LBT in those directions where each MSG1 is received, and if any of those directions is found idle prior to a RAR timer expiration, it responds with PDCCH scrambled with RA-RNTI and the corresponding PDSCH, where gNB in schedules an UL grant over the transmit direction for UE MSG3.

The MSG₂ (PDSCH) in the present art (3GPP NR) from gNB contains information about timing advance, resource allocation for MSG3, MCS for MSG3, TPC command for MSG3 and CSI request (unused) together with temporary C-RNTI, either Backoff Indicator (BI) or a Random Access Preamble ID (RAPID) that identifies the Random Access Preamble (MSG1).

In one embodiment, in the present disclosure, the MSG₂ (PDSCH) contains the resource reference for CSI-RS for additional channel measurements, for instance beam refinement. The CSI-RS and or SS/BCH block measurements may be reported in MSG3 response from UE if requested.

In an embodiment MSG₂ (PDSCH) may indicate the maximum number of reports and conditions of reporting for instance based on received signal strength added to a CSI request indication.

In a different embodiment, there are different TPC fields for SSB and for CSI-RS, such that if UE uses for MSG3 a TCI-State based on SS/PBCH block measurement the UE shall use the TPC command for MSG3 PUSCH indicated in MSG2. If UE MSG3 is sent on the direction of received CSI-RS the corresponding TPC will be selected, which may differ from TPC for MSG3 based on SS/PBCH.

When detecting a DCI format in response to a PUSCH transmission scheduled by a RAR UL grant or corresponding PUSCH retransmission scheduled by a DCI format o_o with CRC scrambled by a TC-RNTI provided in the corresponding RAR message, the UE may assume the PDCCH carrying the DCI format has the same DM-RS antenna port quasi co-location properties as for a SS/PBCH block the UE used for PRACH association, regardless of whether or not the UE is provided TCI-State for the CORESET where the UE receives the PDCCH with the DCI format.

After UE collects multiple MSG₂ responses from gNB, UE must inform gNB about his unique identity for the previous successful MSG1 messages sent.

In one embodiment, in MSG3 UE identifies itself using a single C-RNTI from those provided by gNB in MSG 2 response (for instance the first one received). In MSG3 UE provides a map or a list or an index in table that indicates the instances when UE sent MSG1 or all received C-RNTI values in all MSG2.

In a different embodiment, UE respond to the received MSG₂ with a MSG3, where the MSG3 contains two C-RNTI values. One C-RNTI value was the one allocated by gNB in the corresponding MSG2, and another C-RNTI is the same for all MSG3 and may be the first received C-RNTI.

For instance:

| | | |
|---|---|---|
| MSG3 - 1 | C-RNTI 1 | C-RNT 1 |
| MSG3- 2 | C-RNTI 2 | C-RNT 1 |
| MSG3 -3 | C-RNTI 3 | C-RNT 1 |

In this way gNB may associate multiple received MSG1 to a single UE identity.

After gNB receives one or multiple MSG3 from UE, gNB executes a LBT operation if necessary and transmit a MSG₄ via PDSCH with contention resolution identity. In this message, gNB maps the all received MSG1 to a single UE identity based on the UE identity received in MSG3.

In response to the PDSCH reception with the UE contention resolution and identity resolution (MSG4), the UE transmits HARQ-ACK information in a PUCCH, where it acknowledges the unique identity.

In one embodiment, gNB schedules multiple MSG₄ transmissions to multiple directions, corresponding to a subset of MSG1 or MSG3 received directions.

If gNB transmits the same MSG₄ in multiple directions after multiple directional successful LBTs, gNB communicates in each of them the number of transmitted MSG4, which is the number of the expected ACK from UE.

In the preferred embodiment we introduce the concept of multi-directional HARQ for directional LBT. When UE (or gNB) that received multiple messages (from one or multiple directions - spatial receive filters) they may correspond to the same multi-directional HARQ process.

A multi-directional HARQ process is characterized by multiple directions where UE may use the directional LBT prior to sending ACK/NACK.

In other words, the UL resource allocation for PUSCH/PUCCH corresponds to multiple directions that gNB is able to simultaneously monitor (for instance using multiple panels).

UE tries directional LBTs toward the provided directions and sent an ACK/NACK for all received messages corresponding to the same multi-directional HARQ, in the first direction that passes LBT conditions.

When UE receives multiple MSG4 with contention and identity resolution, UE acknowledges it with ACK message. UE may be required to do a LBT prior to transmit the ACK. If one of the directional LBT fails, UE may try other directions corresponding to those indicated by the MSG4. UE may acknowledge all received MSG4 in the first successful LBT direction.

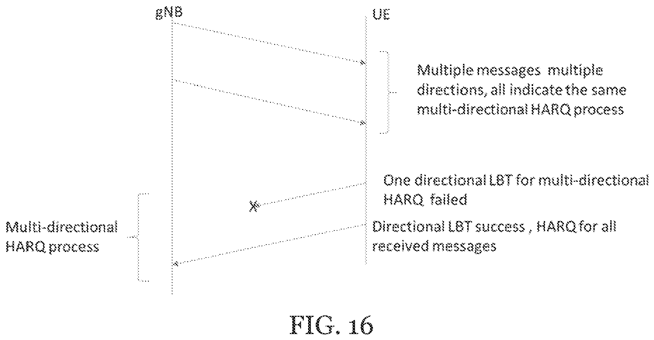

In the preferred embodiment, UE replies with a single ACK message that acknowledge multiple MSG₄ (for instance a bit dedicated to each one) as shown in Figure 16.

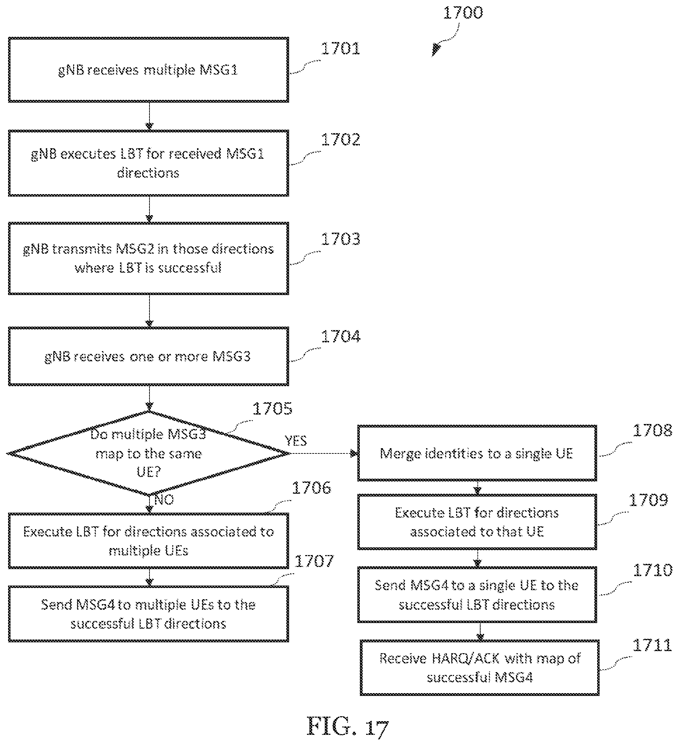

Figure 17 illustrates a diagram of method 1700, an example embodiment for merging multiple MSG1 sent from the same UE in a single identity. As shown in step 1701, a gNB receives multiple MSG1 and in step 1702, executes LBT for the received MSG1 directions. The gNB transmits MSG2 in those directions where LBT is successful. In step 1704, the gNB receives one or more MSG3 and, in step 1705, checks if multiple MSG3 map to the same UE.

In one embodiment, if multiple MSG3 do not map to the same UE, the gNB executes LBT for directions associated to multiple UEs and sends MSG4 to multiple UEs to the successful LBT directions.

In another embodiment, if multiple MSG3 map to the same UE, the gNB merges identities to a single UE, executes LBT for directions associated to that UE, and sends MSG4 to a single UE to the successful LBT directions, as shown in steps 1708-1710. The gNB then receives HARQ/ACK with map of successful MSG4, as shown in step 1711.

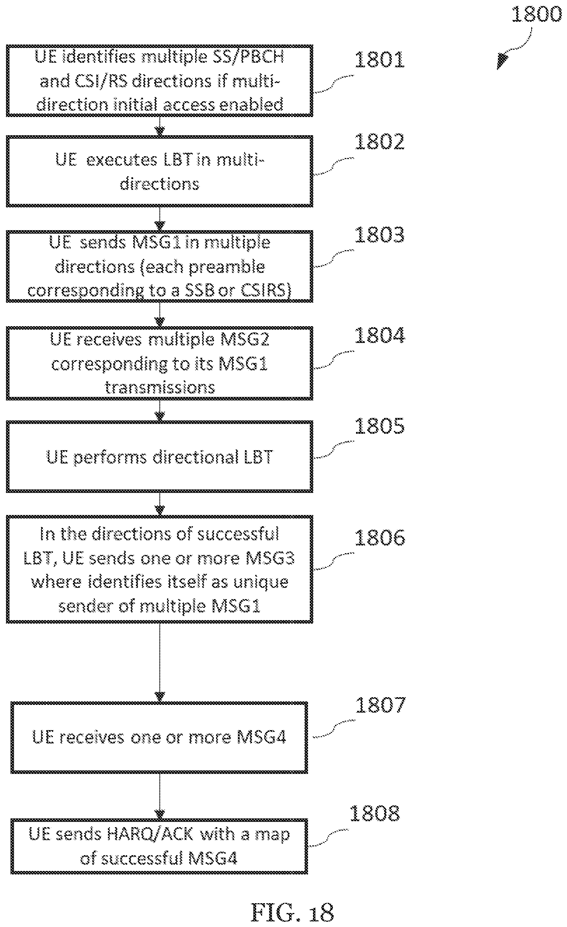

Figure 18 illustrates a flowchart of an example embodiment for multiple MSG1 sent from the same UE in a single identity. As shown in step 1801, a UE identifies multiple SS/PBCH and CSI/RS directions if multi-direction initial access enabled. In step 1802, the UE then executes LBT in multi-directions and, in step 1803, sends MSG1 in multiple directions (each preamble corresponding to a SSB or CSIRS). As shown in step 1804, the UE then receives multiple MSG2 corresponding to its MSG1 transmissions. The UE performs directional LBT, and in the directions of successful LBT, the UE sends one or more MSG3 where identifies itself as unique sender of multiple MSG1, as shown in steps 1805 and 1806. The UE then receives one or more MSG4, and the UE sends HARQ/ACK to the gNB with a map of successful MSG4, as shown in steps 1807 and 1808.

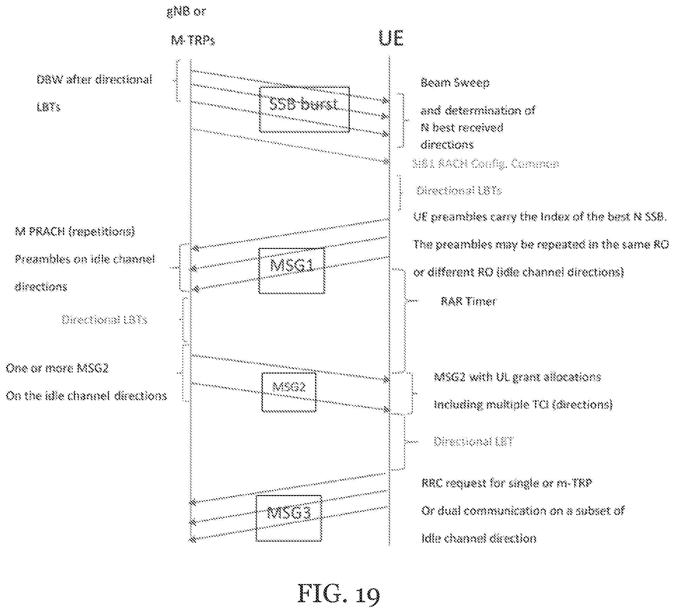

Figure 19 shows an example embodiment for multi-direction sensing and transmissions for initial channel access. The gNB or M-TRPs send multiple directional SSB burst messages. The UE determines the best received directions, decodes SIB1 and performs a directional LBT procedure. The UE sends one or more MSG1 with the index of the best received directions. The gNB or M-TRPs perform a directional LBT procedure and send one or more MSG2 on the idle channel directions. The UE receives one or more MSG2 with UL grant allocations including multiple directions. The UE performs a directional LBT procedure and sends MSG3 RRC request for single or M-TRP or dual communication on a subset of idle channel directions.

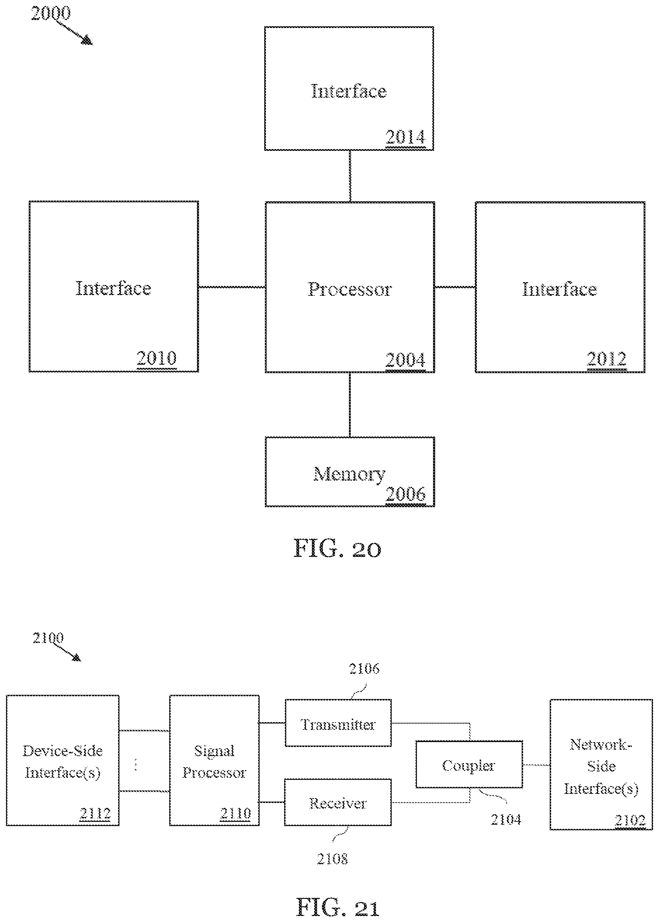

Figure 20 illustrates a block diagram of an embodiment processing system 2000 for performing methods described herein, which may be installed in a host device. As shown, the processing system 2000 includes a processor 2004, a memory 2006, and interfaces 2010-2014, which may (or may not) be arranged as shown in Figure 20. The processor 2004 may be any component or collection of components adapted to perform computations and/or other processing related tasks, and the memory 2006 may be any component or collection of components adapted to store programming and/or instructions for execution by the processor 2004. In an embodiment, the memory 2006 includes a non-transitory computer readable medium. The interfaces 2010, 2012, 2014 may be any component or collection of components that allow the processing system 2000 to communicate with other devices/components and/or a user. For example, one or more of the interfaces 2010, 2012, 2014 may be adapted to communicate data, control, or management messages from the processor 2004 to applications installed on the host device and/or a remote device. As another example, one or more of the interfaces 2010, 2012, 2014 may be adapted to allow a user or user device (e.g., personal computer (PC), etc.) to interact/communicate with the processing system 2000. The processing system 2000 may include additional components not depicted in Figure 20, such as long term storage (e.g., non-volatile memory, etc.).

In some embodiments, the processing system 2000 is included in a network device that is accessing, or part otherwise of, a telecommunications network. In one example, the processing system 2000 is in a network-side device in a wireless or wireline telecommunications network, such as a base station, a relay station, a scheduler, a controller, a gateway, a router, an applications server, or any other device in the telecommunications network. In other embodiments, the processing system 2000 is in a user-side device accessing a wireless or wireline telecommunications network, such as a mobile station, a user equipment (UE), a personal computer (PC), a tablet, a wearable communications device (e.g., a smartwatch, etc.), or any other device adapted to access a telecommunications network.

In some embodiments, one or more of the interfaces 2010, 2012, 2014 connects the processing system 2000 to a transceiver adapted to transmit and receive signaling over the telecommunications network.

Figure 21 illustrates a block diagram of a transceiver 2100 adapted to transmit and receive signaling over a telecommunications network. The transceiver 2100 may be installed in a host device. As shown, the transceiver 2100 comprises a network-side interface 2102, a coupler 2104, a transmitter 2106, a receiver 2108, a signal processor 2110, and a device-side interface 2112. The network-side interface 2102 may include any component or collection of components adapted to transmit or receive signaling over a wireless or wireline telecommunications network. The coupler 2104 may include any component or collection of components adapted to facilitate bi-directional communication over the network-side interface 2102. The transmitter 2106 may include any component or collection of components (e.g., up-converter, power amplifier, etc.) adapted to convert a baseband signal into a modulated carrier signal suitable for transmission over the network-side interface 2102. The receiver 2108 may include any component or collection of components (e.g., down-converter, low noise amplifier, etc.) adapted to convert a carrier signal received over the network-side interface 2102 into a baseband signal. The signal processor 2110 may include any component or collection of components adapted to convert a baseband signal into a data signal suitable for communication over the device-side interface(s) 2112, or vice-versa. The device-side interface(s) 2112 may include any component or collection of components adapted to communicate data-signals between the signal processor 2110 and components within the host device (e.g., the processing system 2000, local area network (LAN) ports, etc.).

The transceiver 2100 may transmit and receive signaling over any type of communications medium. In some embodiments, the transceiver 2100 transmits and receives signaling over a wireless medium. For example, the transceiver 2100 may be a wireless transceiver adapted to communicate in accordance with a wireless telecommunications protocol, such as a cellular protocol (e.g., long-term evolution (LTE), etc.), a wireless local area network (WLAN) protocol (e.g., Wi-Fi, etc.), or any other type of wireless protocol (e.g., Bluetooth, near field communication (NFC), etc.). In such embodiments, the network-side interface 2102 comprises one or more antenna/radiating elements. For example, the network-side interface 2102 may include a single antenna, multiple separate antennas, or a multi-antenna array configured for multi-layer communication, e.g., single input multiple output (SIMO), multiple input single output (MISO), multiple input multiple output (MIMO), etc. In other embodiments, the transceiver 2100 transmits and receives signaling over a wireline medium, e.g., twisted-pair cable, coaxial cable, optical fiber, etc. Specific processing systems and/or transceivers may utilize all of the components shown, or only a subset of the components, and levels of integration may vary from device to device.

It should be appreciated that one or more steps of the embodiment methods provided herein may be performed by corresponding units or modules. For example, a signal may be transmitted by a transmitting unit or a transmitting module. A signal may be received by a receiving unit or a receiving module. A signal may be processed by a processing unit or a processing module. The respective units/modules may be hardware, software, or a combination thereof. For instance, one or more of the units/modules may be an integrated circuit, such as field programmable gate arrays (FPGAs) or application-specific integrated circuits (ASICs).

Although the description has been described in detail, it should be understood that various changes, substitutions and alterations can be made without departing from the scope of this disclosure as defined by the appended claims. Moreover, the scope of the disclosure is not intended to be limited to the particular embodiments described herein, as one of ordinary skill in the art will readily appreciate from this disclosure that processes, machines, manufacture, compositions of matter, means, methods, or steps, presently existing or later to be developed, may perform substantially the same function or achieve substantially the same result as the corresponding embodiments described herein. Accordingly, the appended claims are intended to include within their scope such processes, machines, manufacture, compositions of matter, means, methods, or steps.

While this disclosure has been described with reference to illustrative embodiments, this description is not intended to be construed in a limiting sense. Various modifications and combinations of the illustrative embodiments, as well as other embodiments of the disclosure falling within the scope of the claims, will be apparent to persons skilled in the art upon reference to the description. It is therefore intended that the appended claims encompass any such modifications or embodiments.

## Claims

1. A method for operating a user equipment, UE, the method comprising:
decoding (1101), by the UE, at least one of a master information block, MIB, or a system information block, SIB, received from a base station;
determining (1102), by the UE, that discovery burst transmission window, DBTW, is enabled, in accordance with at least the decoded MIB or SIB, wherein the DBWT enablement is announced in the MIB, or the DBTW enablement is provided in the SIB;
decoding (1104), by the UE, DBTW parameters; and
executing (1109), by the UE, a random access channel, RACH, procedure in accordance with the decoded DBTW parameters.

2. The method of claim 1 further comprising:
determining, by the UE in response to the DBTW being enabled, that no DBTW parameters are provided; and
executing, by the UE, a RACH procedure in accordance with default DBTW parameters in response to determining that no DBTW parameters are provided.

3. The method of claim 1 further comprising:
determining, by the UE, that DBTW has signal quality reporting; and
reporting, by the UE, synchronization signal physical broadcast channel/channel state information reference signal, SSB/CSI-RS, quality.

4. The method of claim 1, wherein the UE executes a RACH procedure in accordance without DBTW in response to determining that DBTW is not enabled.

5. A user equipment, UE, comprising units configured to perform the method according to any one of claims 1 to 4.

## Patentansprüche

1. Verfahren für den Betriebs eines Benutzergeräts (user equipment, UE), wobei das Verfahren Folgendes umfasst:
Dekodieren (1101), durch das UE, von mindestens einem eines Master-Informationsblocks (MIB) oder eines System-Informationsblocks (SIB), die von einer Basisstation empfangen wurden;
Bestimmen (1102) durch das UE, dass das Discovery Burst Transmission Window (DBTW) aktiviert ist, gemäß mindestens dem dekodierten MIB oder SIB, wobei die DBWT-Aktivierung im MIB angekündigt oder die DBTW-Aktivierung im SIB bereitgestellt wird;
Dekodieren (1104), durch das UE, von DBTW-Parametern; und
Ausführen (1109) durch das UE, eines Random Access Channel-Verfahrens, RACH, gemäß den dekodierten DBTW-Parametern.

2. Verfahren nach Anspruch 1, ferner umfassend:
Bestimmen, durch das UE als Reaktion auf die Aktivierung von DBTW, dass keine DBTW-Parameter bereitgestellt werden; und
Ausführen, durch das UE, eines RACH-Verfahrens gemäß Standard-DBTW-Parametern als Reaktion auf die Bestimmung, dass keine DBTW-Parameter bereitgestellt werden.

3. Verfahren nach Anspruch 1, ferner umfassend:
Bestimmen, durch das UE, dass DBTW über Signalqualitätsberichte verfügt; und
Melden, durch das UE, der Qualität des physikalischen Synchronisationssignals, des SSB/CSI-RS-Referenzsignals (Kanal- /Kanalzustandsinformationen).

4. Verfahren nach Anspruch 1, wobei das UE ein RACH-Verfahren gemäß ohne DBTW ausführt, wenn es feststellt, dass DBTW nicht aktiviert ist.

5. Benutzergerät (UE), umfassend Einheiten, die konfiguriert sind, um das Verfahren nach einem der Ansprüche 1-4 durchzuführen.

## Revendications

1. Procédé pour le fonctionnement d'un équipement utilisateur, UE, le procédé comprenant :
le décodage (1101), par l'UE, d'au moins l'un d'un bloc d'informations maître, MIB, ou d'un bloc d'informations système, SIB, reçus à partir d'une station de base ;
la détermination (1102), par l'UE, que la fenêtre de transmission de rafale de découverte, DBTW, est activée, conformément au moins au MIB ou SIB décodé, dans lequel l'activation DBWT est annoncée dans le MIB, ou l'activation DBTW est fournie dans le SIB ;
le décodage (1104), par l'UE, de paramètres DBTW ; et
l'exécution (1109), par l'UE, d'une procédure de canal d'accès aléatoire, RACH, conformément aux paramètres DBTW décodés.

2. Procédé selon la revendication 1 comprenant également :
la détermination, par l'UE en réponse à l'activation de la DBTW, qu'aucun paramètre DBTW n'est fourni ; et
l'exécution, par l'UE, d'une procédure RACH conformément aux paramètres DBTW par défaut en réponse à la détermination qu'aucun paramètre DBTW n'est fourni.

3. Procédé selon la revendication 1 comprenant également :
la détermination, par l'UE, que la DBTW a un rapport de qualité de signal ; et
le signalement, par l'UE, de la qualité du signal de référence d'informations d'état de canal/de canal de diffusion physique de signal de synchronisation, SSB/CSI-RS.

4. Procédé selon la revendication 1, dans lequel l'UE exécute une procédure RACH conformément sans DBTW en réponse à la détermination que la DBTW n'est pas activé.

5. Équipement utilisateur, UE, comprenant des unités configurées pour réaliser le procédé selon l'une quelconque des revendications 1 à 4.
